## Europäisches Patentamt
## European Patent Office
## Office européen des brevets

(19)

(11) Veröffentlichungsnummer: **0 153 999**
**B1**

(12) # EUROPÄISCHE PATENTSCHRIFT

(45) Veröffentlichungstag der Patentschrift:
16.12.87

(51) Int. Cl.⁴: **F 16 K 24/04**

(21) Anmeldenummer: **84114074.2**

(22) Anmeldetag: **22.11.84**

(54) Entlüftungsventil insbesondere zum Entlüften von Heizsystemen.

(30) Priorität: **23.12.83 DE 3346614**

(43) Veröffentlichungstag der Anmeldung:
**11.09.85 Patentblatt 85/37**

(45) Bekanntmachung des Hinweises auf die Patenterteilung:
**16.12.87 Patentblatt 87/51**

(84) Benannte Vertragsstaaten:
**AT CH DE FR IT LI NL**

(56) Entgegenhaltungen:
**AT-B-55 924**
**DE-A-2 212 112**
**DE-C-2 055 549**
**FR-E-55 626**
**GB-A-115 808**
**US-A-3 416 696**
**US-A-4 369 810**

(73) Patentinhaber: **Anton Hummel GmbH Metallwarenfabrik, 2-4 Mozartstrasse, D-7808 Waldkirch (DE)**

(72) Erfinder: **Gehring, Peter, Eichhofweg, D-7809 Simonswald- Griesbach (DE)**

(74) Vertreter: **Schmitt, Hans, Dipl.- Ing., Dreikönigstrasse 13, D-7800 Freiburg (DE)**

EP 0 153 999 B1

## Beschreibung

Die Erfindung betrifft ein Entlüftungsventil mit einer eine innere Entlüftungsöffnung verschließenden Entlüftungsschraube und einer Kammer mit einer insbesondere durch Verdrehen in ihrer Position veränderbaren äußeren Entlüftungsöffnung, welche Kammer an einem Ventil- oder Stopfengehäuse od. dgl. dicht angeordnet ist, insbesondere zum Entlüften von Heizsystemen, vorzugsweise von Heizkörpern, wobei die innere Entlüftungsöffnung in die Kammer mündet.

Ein derartiges Entlüftungsventil ist aus DE-C-20 55 549 bekannt. Dabei ist für die Veränderung der Position der Entlüftungsöffnung die gesamte Kammer verdrehbar. Sie ist durch eine Schnappbefestigung an dem Gehäuse dicht befestigt. Dieses Entlüftungsventil ist insbesondere zum Entlüften von Heizkörpern vorteilhaft, weil die Entlüftungsöffnung vor allem in Heizkörpernischen od. dgl. so eingestellt werden kann, daß das in der letzten Phase einer Entlüftung austretende Wasser nicht die umgebende Wand erreichen kann. Ungünstig ist jedoch, daß diese drehbare Kammer und insbesondere das als Entlüftungsöffnung dienende Röhrchen vorsteht, so daß entweder dieses Röhrchen oder aber die gesamte drehbare Kammer beim Transport beschädigt werden kann, so daß sie später gegebenenfalls nicht ganz dicht ist und der angestrebte Effekt beim Entlüften zumindest teilweise aufgehoben ist. Außerdem stören vorstehende Teile am Heizkörper selbst. Darüber hinaus ist eine über das Ventil- oder Stopfengehäuse vorstehende drehbare, durch Schnappbefestigung anbringbare und zusätzlich noch abzudichtende Kammer ein Teil, das einen nicht unbeachtlichen Herstellungsaufwand erfordert, am Heizkörper od. dgl. zu entlüftendem Teil z. B. bei dessen Reinigung stört und eine Verletzungsgefahr vor allem für Kinder darstellt, die aufgrund ihrer Größe etwa mit ihrem Kopfbereich häufig in der Höhe der Entlüftungsventile sind.

Es besteht deshalb die Aufgabe, ein Entlüftungsventil der eingangs erwähnten Art zu schaffen, bei welchem der Vorteil erhalten bleibt, die Entlüftungsöffnung in eine zum Entlüften günstige Position bringen zu können, wobei jedoch keine oder kaum noch Teile der eigentlichen Entlüftungsvorrichtung gegenüber dem Ventil- oder Stopfengehäuse vorstehen sollen, so daß bei der Benutzung und beim Transport keine Beschädigungsgefahr besteht; darüber hinaus soll auf diese Weise ein Steckschlüssel über einer eventuell außen an dem Gehäuse vorgesehenen Sechskant passen, ohne durch die Entlüftungskammer behindert zu sein, so daß der gesamte Ventil- oder Stopfenkörper selbst gut montiert werden kann.

Die Lösung dieser Aufgabe besteht im wesentlichen darin, daß die Kammer von einer Innenhöhlung des Gehäuses gebildet ist, an der ein Verschlußteil dichtend befestigt ist, daß der Verschlußteil als Scheibe oder scheibenförmiger Einsatz ausgebildet und drehbar an dem Gehäuse befestigt ist und die äußere Entlüftungsöffnung aufweist.

Somit mündet die innere Entlüftungsöffnung im Inneren des Ventil- oder Stopfengehäuses, welches dadurch eine zusätzliche Funktion erhält. Es genügt dann ein äußerer Abschluß mit der äußeren Entlüftungsöffnung, welcher als drehbarer scheibenartiger Verschußteil die Positionierung dieser äußeren Entlüftungsöffnung erlaubt. Ein solches Scheiben-Verschlußteil ist in der Herstellung einfach, weil unter Umständen für die Entlüftungsöffnung eine einfache Lochung genügt. Allerdings sind auch Ausgestaltungen mit stutzenförmigen Ansätzen u. dgl. möglich. Jedoch können in einem störenden Ausmaß vorstehende Teile vermieden werden.

Der drehbare Verschlußteil kann an der Entlüftungsschraube und/oder an dem die Entlüftungsschraube aufweisenden inneren Stutzen und/oder der diese mit Abstand umgebenden Innenwand des Gehäuses dichtend anliegen und/ oder verrastet sein. Es gibt also unterschiedliche Möglichkeiten, den drehbaren Verschlußteil fest und dicht am oder im Gehäuse anzubringen und dennoch nachher drehen zu können. Dabei ergibt sich eine sehr einfache Konstruktion, bei der dennoch zur Bildung der drehbaren Kammer das Gehäuse mit herangezogen wird.

Besonders vorteilhaft ist dabei, daß der Verschlußteil ganz oder nahezu ganz im Gehäuse versenkt sein kann. Dadurch werden vorstehende, störende Teile noch besser vermieden.

Der Verschlußteil besteht zweckmäßigerweise aus elastischem Werkstoff und ist in seinem Dichtungs- und Rastbereich durch seine Eigenelastizität verrastbar oder anpreßbar. Dabei kann der Verschlußteil durch an ihm vorhandene Dichtkanten und/oder Dichtflächen gegenüber dem Gehäuse und/oder der Entlüftungsschraube abdichtbar sein. Dies gilt vor allem für eine Ausführungsform, bei welcher der Verschlußteil aus Kunststoff besteht. Je nach Konstruktion und Befestigung kann er auch aus Metall bestehen.

Ist die Entlüftungsöffnung als mit dem Verschlußteil und dessen Austrittsöffnung verbundenes, von dem Verschlußteil nach außen vorstehendes Röhrchen ausgebildet, so daß beispielsweise auch ein Schlauch angeschlossen werden kann, um austretendes Wasser sicher in ein Gefäß zu führen, sind wierum unterschiedliche Ausgestaltungen möglich, die sich aus den weiteren Ansprüchen ergeben. Dabei ist es beispielsweise möglich, daß das Entlüftungsrohrchen gegenüber dem Gehäuse aus diesem heraus und in dieses hinein verschiebbar ist. Auch dies kann auf unterschiedliche Weise geschehen, indem entweder der ganze Verschlußteil oder aber nur das Röhrchen relativ zu diesem Verschlußteil axial verschiebbar und festlegbar sind.

Denkbar ist auch, daß der Verschlußteil teilweise aus Kunststoff und teilweise aus Metall besteht, wenn beispielsweise ein verschiebbares Röhrchen vorhanden is. Entweder kann dann der Verschlußteil aus Kunststoff bestehen und weitgehend selbstdichtend sein, während das Röhrchen aus Metall sein kann, oder bei einer Befestigung des Verschlußteiles beispielsweise mit Wellensicherungen, Federringen od. dgl. kann der Verschlußteil aus Metall bestehen und mit Hilfe von O-Ringen od. dgl. abgedichtet sein, während das verschiebbare Röhrchen aus Kunststoff sein könnte.

Ausgestaltungen der Erfindung betreffen weitere Ausbildungsmöglichkeiten des drehbaren Verschlußteiles und seiner Verrastung und Abdichtung gegenüber dem Ventilgehäuse sowie des Entlüftungsröhrchens.

Gegebenenfalls kann die Drehbarkeit des Verschlußteiles zum Positionieren der Entlüftungsöffnung und/oder zum axialen Herausschrauben mit Hilfe von zusammenwirkenden Gewinden am Ventilgehäuse und/oder dem Verschlußteil dadurch erleichtert sein, daß insbesondere stirnseitig radiale Schlitze, Bohrungen, Rippen od. dgl. Profilierungen für einen dazu passenden Betätigungsschlüssel vorgesehen sind. Dies erlaubt eine weitere Ausgestaltung der Erfindung dahingehend, daß der Betätigungsschlüssel zusätzlich zu seiner Kupplungsstelle zum Angreifen an dem drehbaren Verschlußteil ein Entlüftungsröhrchen aufweisen kann, welches mit der Entlüftungsöffnung des Verschlußteiles kuppelbar, insbesondere in oder auf diese als Verlängerung steckbar ist. Dabei kann der Betätigungsschlüssel zusätzlich neben der Kupplungsstelle zum Drehen der Verschlußscheibe auch eine Kupplung zum Angreifen an der Entlüftungsschraube haben.

Bezüglich der drehbaren und dichten Lagerung des Verschlußteiles gegenüber dem Ventilgehäuse sind unterschiedlichste Ausgestaltungen möglich, die sich ebenfalls aus den Ansprüchen ergeben. Dabei ist sowohl ein Angriff an der Innenseite als auch an der Außenseite des Randbereiches des Ventilgehäuses möglich.

Vor allem bei Kombination einzelner oder mehrerer der vorbeschriebenen Merkmale und Maßnahmen ergibt sich ein Entlüftungsventil, bei dem die Entlüftungsöffnung in günstiger Weise in eine passende Position verschoben werden kann, wobei ablaufendes Wasser auch vom Heizkörper selbst ferngehalten und abgeleitet werden kann, ohne daß jedoch beim Transport des Ventiles empfindliche Kunststoffteile über den stabilen Ventilkörper vorstehen.

Dadurch wird auch die Montage des Ventiles selbst erleichtert, weil ein Steckschlüssel ohne Beschädigungsgefahr für die drehbaren Teile der Entlüftungsvorrichtung auf den in der Regel an der Außenseite des Ventilgehäuses vorgesehenen Sechskant aufgesteckt werden kann. Dabei braucht dann in keiner Weise auf die Entlüftungsöffnung Rücksicht genommen zu werden. Diese kann nachträglich in eine günstige Position gedreht und gegebenenfalls auch noch axial verschoben werden. Besonders günstig ist es dabei, wenn das Entlüftungsröhrchen nicht nur axial, sondern gleichzeitig noch schräg radial nach außen verschiebbar ist, so daß es einerseits in eingefahrener Position eine bestmögliche Raumausnutzung erlaubt, während andererseits dennoch in herausgeschobener Benutzungsposition ein genügend großer Abstand von dem eigentlichen Ventilgehäuse und somit einem Heizkörper erreicht wird.

Nachstehend ist die Erfindung mit ihren ihr als wesentlich zugehörenden Einzelheiten anhand der Zeichnung in einer großen Anzahl von Ausführungsbeispielen noch näher erläutert. Dabei ist bei einer Reihe von Ausführungsbeispielen einmal ein Längsschnitt durch ein vollständiges Entlüftungsventil und in einer weiteren Figur eine Explosionszeichnung desselben Entlüftungsventiles dargestellt, wobei unter Umständen für den Verschlußteil gleichzeitig mehrere Beispiele vorgesehen sind. Es zeigt im einzelnen

Fig. 1 einen Längsschnitt durch ein Entlüftungsventil, bei welchem als Verschlußteil ein am Innen- und am Außendurchmesser im Ventilgehäuse verrasteter scheibenförmiger Verschlußteil mit Entlüftungsöffnung vorgesehen ist,

Fig. 2 die Explosionszeichnung zu Fig. 1, wobei zusätzlich zwei scheibenförmige Verschlußteile mit röhrchenförmigen Entlüftungsöffnungen dargestellt sind,

Fig. 3 ein zu Fig. 1 passendes abgewandeltes Verschlußteil mit einer zusätzlichen Abdichtung gegenüber der Entlüftungsschraube,

Fig. 4 einen Längsschnitt durch ein Entlüftungsventil mit einem schüsselförmig nach innen gewölbten Verschlußteil,

Fig. 5 die Explosionszeichnung zu Fig. 4,

Fig. 6 eine Abwandlung des Verschlußteiles insbesondere für die Ausführungsform nach Fig. 4 und 5, wobei zusätzliche Dichtlippen an dem Verschlußteil gegenüber der Entlüftungsschraube vorgesehen sind,

Fig. 7 wiederum einen Längsschnitt durch ein Entlüftungsventil mit einem Verschlußteil, das im Ventilgehäuse einrastet und dichtend an der Entlüftungsschraube anliegt und als Entlüftungsöffnung eine eingeformte Hülse od. dgl. aufweist,

Fig. 8 die Explosionszeichnung zu Fig. 7 und

Fig. 9 mehrere zu Fig. 7 und 8 passende verschiedene Verschlußteile,

Fig. 10 einen Längsschnitt einer abgewandelten Ausführungsform des Entlüftungsventiles, bei welchem der Verschlußteil an der Innenseite des Ventilgehäuses einrastet und stirnseitig Verformungen für den Angriff eines Betätigungsschlüssels hat,

Fig. 11 die Explosionszeichnung zu Fig. 10 ohne die Entlüftungsschraube,

Fig. 12 eine Seitenansicht eines Betätigungsschlüssels mit integriertem Kanal zum Verlängern der Entlüftungsöffnung,

Fig. 13 die Stirnansicht des Verschlußteiles gemäß Fig. 10 und 11 mit unterschiedlichen stirnseitigen Verformungen für den Angriff entsprechender Gegen-Vorsprünge od. dgl. an dem Betätigungsschlüssel,

Fig. 14 eine weitere Ausführungsform eines Entlüftungsventiles, dessen drehbarer Verschlußteil durch eine Wellensicherung gehalten ist,

Fig. 15 die zu Fig. 14 gehörende Explosionszeichnung,

Fig. 16 ein Entlüftungsventil, dessen drehbarer Verschlußteil durch eine Einbördelung am Ventilgehäuse gehalten ist,

Fig. 17 die zu Fig. 16 gehörende Explosionszeichnung,

Fig. 18 ein Entlüftungsventil mit drehbarem Verschlußteil, der zusätzlich durch die Axialverstellung der Entlüftunsschraube bei deren Verdrehung axial mitverstellt wird,

Fig. 19 die Explosionszeichnung zu Fig. 18,

Fig. 20 ein Entlüftungsventil mit drehbarem Verschlußteil, welches an seiner inneren, an der Entlüftungsschraube anliegenden Öffnung ein Innengewinde hat, das mit einem Außengewinde in diesem Bereich der Entlüftungsöffnung zusammenwirkt, wobei an der Stirnseite des Verschlußteiles Angriffsstellen für die Verdrehung des Verschlußteiles bei gleichzeitiger Axialverstellung durch das Gewinde vorgesehen sind,

Fig. 21 die Explosionszeichnung zu Fig. 20,

Fig. 22 ein Entlüftungsventil mit einem Verschlußteil, das an seiner Außenseite im Inneren des Gehäuses ein Außengewinde hat, das mit einem Innengewinde in diesem Gehäusebereich zusammenwirkt und durch Verdrehen gleichzeitig axial verstellbar ist,

Fig. 23 die Explosionszeichnung zu Fig. 22,

Fig. 24 Entlüftungsventil, welches im äußeren Bereich der Innenseite des Gehäuses mit einem dort vorgesehenen Innengewinde über ein eigenes Außengewinde zusammenwirkt und durch Verdrehen gleichzeitig axial verstellbar ist,

Fig. 25 die Explosionszeichnung zu Fig. 24,

Fig. 26 ein nur in eine glatte Innenöffnung des Ventilgehäuses eingestecktes, vom Kopf der Entlüftungsschraube über eine innere Dichtlippe festgelegtes Verschlußteil,

Fig. 27 die Explosionszeichnung zu Fig. 26,

Fig. 28 einen Längsschnitt durch ein Entlüftungsventil, bei welchem der Verschlußteil die Außenseite des Randes des Ventilgehäuses rastend umgreift,

Fig. 29 die Explosionszeichnung zu Fig. 28,

Fig. 30 einen Längsschnitt durch ein Entlüftungsventil bzw. einen Entlüftungsstopfen, bei welchem der drehbare Verschlußteil im Inneren des Gehäuses verrastet ist, aber stirnseitig übersteht,

Fig. 31 den Verschlußteil gemäß Fig. 30,

Fig. 32 bis 37 unterschiedliche Verschlußteile mit axial verstellbaren Röhrchen zum Verlängern der Entlüftungsöffnung, die bei den verschiedenen Verschlußteilen der vorerwähnten Ausführungsbeispiele verwendbar sind,

Fig. 38 in vergrößertem Maßstab einen Längsschnitt durch ein Entlüftungsventil mit drehbarem Luftaustritt und schräg axial ausziehbarem Entlüftungsröhrchen, wobei das Entlüftungsröhrchen eingeschoben ist,

Fig. 39 das Entlüftungsröhrchen gemäß Fig. 38 in ausgezogener Position sowie

Fig. 40 eine der Fig. 39 entsprechende Ausführungsform, bei welcher das schräg verstellbare Röhrchen ein Außengewinde hat, in welches Gegenvorsprünge an der Innenseite der Entlüftungsöffnung eingreifen, wobei am äußeren Ende des Röhrchens ein Betätigungsschlitz angedeutet ist.

Bei den nachfolgend beschriebenen verschiedenen Ausführungsbeispielen eines im ganzen mit 1 bezeichneten Entlüftungsventiles sind übereinstimmende Teile selbst bei abgewandelter Formgebung und Ausführung jeweils der besseren Übersicht wegen mit übereinstimmenden Bezugszeichen versehen. Bei den einzelnen Figuren gegebenenfalls nicht ausdrücklich erwähnte Einzelteile, die bei anderen Figuren erwähnt wurden und dasselbe Bezugszeichen wie dort tragen, funktionieren in gleicher Weise wie bei dem ausführlicher beschriebenen Ausführungsbeispiel.

Das schon erwähnte Entlüftungsventil 1 ist mit einer eine innere Entlüftungsöffnung 3 verschließende Entlüftungsschraube 2 und einer Kammer 4 mit einer durch Verdrehen in ihrer Position veränderbaren äußeren Entlüftungsöffnung 5 versehen. Statt der eigens vorgesehenen inneren Entlüftungsöffnung 3 kann als Entlüftungsöffnung 3 a in bekannter Weise auch eine Abflachung an der Entlüftungsschraube 2 selbst dienen, die bei teilweisem Lösen der Entlüftungsschraube den Entlüftungsweg von innen nach außen bildet, bei eingeschraubter Entlüftungsschraube aber unwirksam ist.

Das in den verschiedenen Ausführungsbeispielen dargestellte Entlüftungsventil 1 eignet sich besonders zum Anbringen an Heizsystemen, vorzugsweise an Heizkörpern. Man erkennt deutlich, daß es ein äußeres Ventil- oder Stopfengehäuse 6 hat, das mit einem Außengewinde 7 in ein entsprechendes Innengewinde eines Heizkörpers einschraubbar ist. Dabei kann der dem Gewinde 7 abgewandte Bereich 8 einen äußeren Mehrkant zum Angriff eines Steckschlüssels haben, mit dem das Gewinde 7 verdreht werden kann. Man erkennt ferner in den verschiedenen Ausführungsbeispielen an einem Bund 9 zur Seite des Gewindes 7 hin offene Einstiche 10 für eine Dichtung, mit der das Entlüftungsventil 1 gegenüber einem Heizkörper abgedichtet werden kann.

Die äußere Entlüftungsöffnung 5 ist in einem dicht am Gehäuse 6 angeordneten, drehbaren Verschlußteil 11 angeordnet, welcher Verschlußteil 11 gemäß der vorstehenden Figurenaufzählung und der nachfolgenden Beschreibung unterschiedliche Formen und unterschiedliche Kupplungsmöglichkeiten mit dem Gehäuse 6 haben kann. Dieser Verschlußteil 11 bildet mit dem Gehäuse 6 die schon erwähnte Kammer 4, in welche die durch die Entlüftungsschraube 2 öffenbare innere Entlüftungsöffnung 3 bzw. 3 a mündet.

Dabei schließt in diesem Fall der Verschlußteil 11 eine Innenhöhlung des Gehäuses 6 ab, jedoch braucht das Gehäuse 6 nicht unbedingt hohl zu sein, sondern könnte auch lediglich einen Abstand oder Kanäle od. dgl. Führungen zu der äußeren Entlüftungsöffnung 5 hin haben.

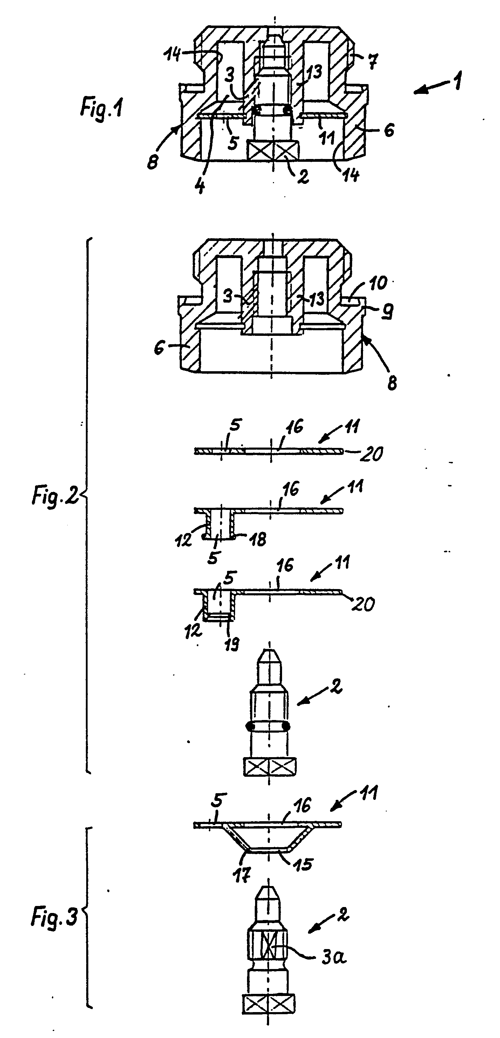

Beim Entlüften wird also in bekannter Weise die Entlüftungsschraube 2 geöffnet, wodurch die in einem Heizkörper befindliche Luft durch die Öffnung 3 oder die Abflachung 3 a zunächst in die Kammer 4 und dann durch die Öffnung 5 nach außen gelangt. Da der Verschlußteil 11 drehbar ist, kann die Öffnung 5 in eine für das Entlüften günstige Position gebracht werden, in der vor allem in der letzten Phase des Entlüftens austretendes Wasser nicht zu Schäden im Umgebungsbereich des Entlüftungsventiles 1 führen kann. In vorteilhafter Weise ist dabei aber der empfindliche drehbare Teil, nämlich der Verschlußteil 11 und die Entlüftungsöffnung 5, sei es lediglich eine Öffnung wie in Fig. 1 oder 3, sei es ein Röhrchen 12 wie ebenfalls in Fig. 2 bei den alternativen Verschlußteilen 11 angedeutet, im Inneren des Gehäuses 6 geschützt untergebracht. Beschädigungen dieser empfindlichen Teile während des Transportes oder ein Stören am Heizkörper od. dgl. sind somit praktisch ausgeschlossen, da der Verschlußteil 11 ganz oder nahezu ganz im Gehäuse 6 versenkt angeordnet ist.

In praktisch allen Ausführungsbeispielen ist der drehbare Verschlußteil 11 als Scheibe oder mehr oder weniger scheibenförmiger Einsatz zum dichten aber drehbaren Einfügen in das Ventilgehäuse 6 ausgebildet und weist die äußere Entlüftungsöffnung 5 auf.

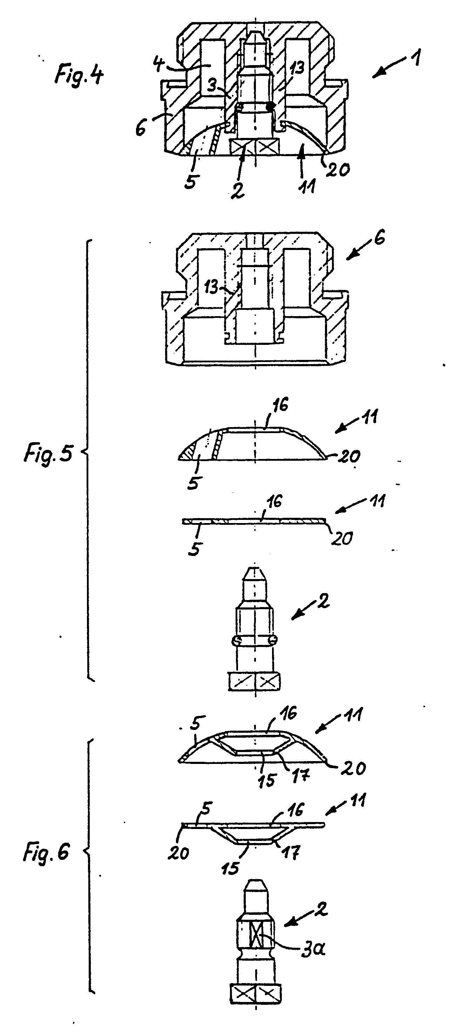

Beispielsweise ist bei den Ausführungsbeispielen nach Fig. 1 bis 9 vorgesehen, daß die als drehbares Verschlußteil 11 ausgebildete Scheibe od. dgl. an dem die Entlüftungsschraube 2 aufweisenden inneren Stutzen 13 und/oder der diese mit Abstand umgebenden Innenwand 14 des Gehäuses 6 gegebenenfalls auch an der Entlüftungsschraube selbst dichtend anliegt und/oder verrastet ist. In Fig. 1 ist beispielsweise dargestellt, wie die Verschlußscheibe sowohl innen als auch außen verrastet sein kann. Das gleiche gilt für die Figuren 2 und 3. Der Verschlußteil 11 besteht zweckmäßigerweise aus elastischem Werkstoff und kann in seinem Dichtungs- oder Rastbereich durch seine Eigenelastizität verrast- oder anpreßbar sein. Dabei kann der Verschlußteil 11 durch an ihm vorhandene Dichtkanten oder Dichtflächen im Bereich der Außenränder 20 und/oder der inneren Öffnungen 15 bzw. 16 (vgl. z. B. Fig. 3 und 6) gegenüber dem Gehäuse 6 und/

oder der Entlüftungsschraube 2 abdichtbar sein. In diesem Falle sind also eigene Dichtungen oder Dichtringe nicht notwendig, obwohl sie auch möglich sind.

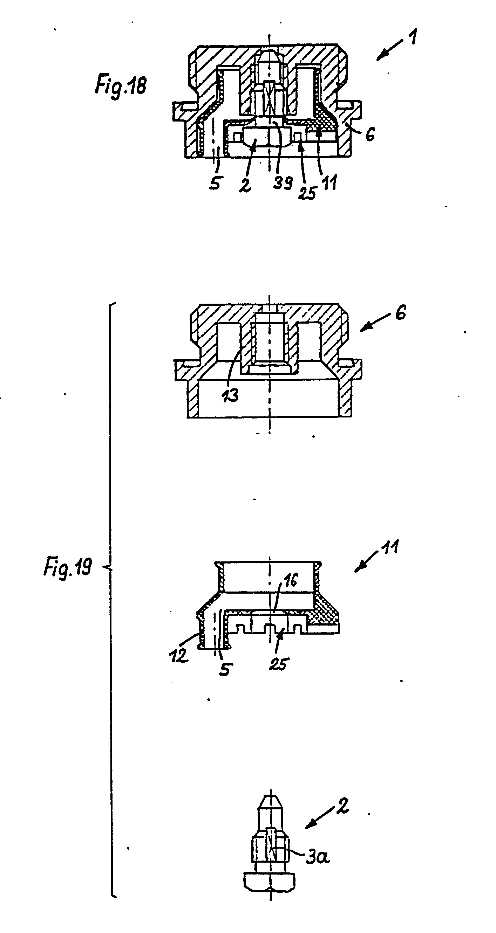

Wie aus Fig. 2, beispielsweise aber auch aus Fig. 19 oder 30 bis 39 oder weiteren Figuren hervorgeht, kann die Entlüftungsöffnung 5 jedoch als mit dem Verschlußteil 11 und dessen Austrittsöffnung 5 verbundenes, von dem Verschlußteil 11 nach außen vorstehendes Röhrchen 12 ausgebildet sein. Umso besser wird auch ein zu entlüftender Heizkörper dagegen geschützt, daß mit der Entlüftung austretendes Wasser an ihm abläuft. Dabei kann gemäß Fig. 2, 19 und weiteren Figuren das Entlüftungsröhrchen 12 an dem Verschlußteil 11 angeformt sein.

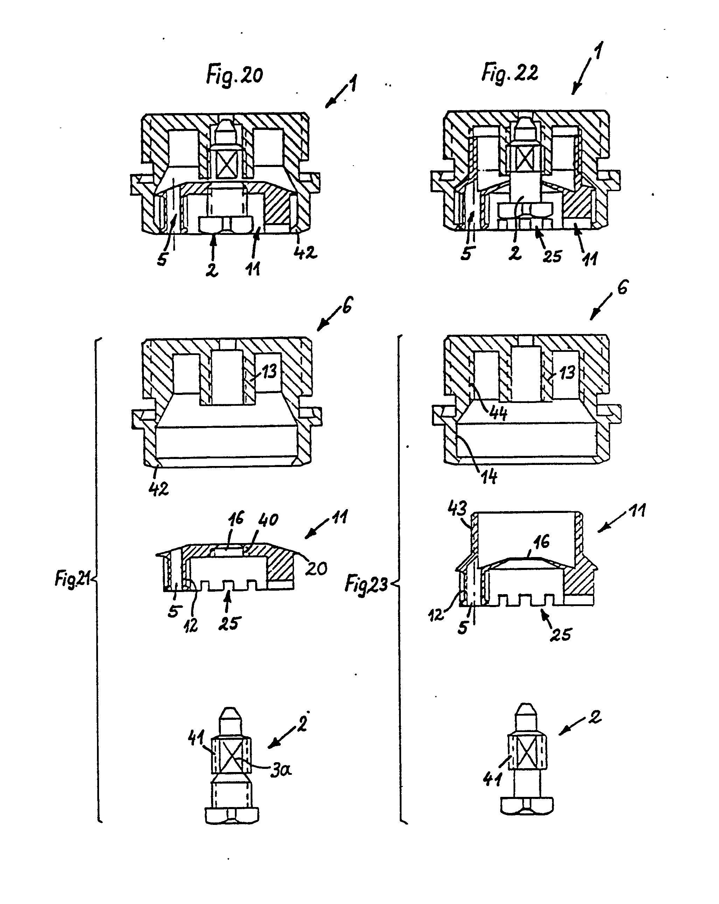

Bei anderen Ausführungsbeispielen, die im folgenden noch näher erläutert werden, ist das Entlüftungsröhrchen 12 gegenüber dem Gehäuse 6 aus diesem heraus und in dieses hinein verschiebbar. Es kann dann in Ruhestellung und insbesondere beim Transport geschützt im Inneren des Gehäuses 6 untergebracht sein, während es beim Entlüften herausgezogen wird und so für einen Abstand des austretenden Wassers von dem zu entlüftenden Heizkörper od. dgl. sorgt. Dabei sind Ausführungsbeispiele vorgesehen, bei denen die Entlüftungsöffnung 5 oder das Entlüftungsröhrchen 12 zusammen mit dem Verschlußteil 11 axial nach außen verschiebbar und festlegbar ist. Eine solche Ausführungsform ist beispielsweise in Fig. 18 und 19 oder in den Figuren 20 bis 25 dargestellt.

Zusätzlich oder statt dessen besteht jedoch die Möglichkeit, daß das Entlüftungsröhrchen 12 relativ zu dem Verschlußteil 11 und dem Gehäuse 6 aus dem Gehäuse 6 nach außen verschiebbar und in dieses versenkbar ist. Beispiele hierfür sind die Figuren 32 bis 39.

In den Figuren 3 und 6 erkennt man, daß der Verschlußteil 11 eine im Zentrum der Scheibe angeformte, mit einer koaxialen Öffnung 15 zu der Lageröffnung 16 der Scheibe 11 versehene Dichtlippe 17 für die Abdichtung gegenüber der Entlüftungsschraube 2 aufweisen kann. Somit ergeben sich im Inneren des Verschlußteiles 11 zwei Anlagelinien, eine gegenüber dem Stutzen 3 und eine gegenüber der Entlüftungsschraube 2, was zu einem stabileren Halt und einer größeren Dichtigkeit führt.

Beispielsweise in Fig. 2, aber auch in weiteren Figuren erkennt man, daß das Entlüftungsröhrchen 12 für das Aufstecken eines Schlauches an seiner Mündung einen äußeren Bund 18 (vgl. auch beispielsweise Fig. 39) oder für ein Einstecken eines Schlauches an seiner Bündung einen inneren Bund 19 aufweisen kann.

Fig. 4 bis 6 zeigt einen als schüsselförmige, nach innen gewölbte Scheibe ausgebildeten Verschlußteil 11, wobei die Innenöffnung 16 drehbar und dicht an dem die Entlüftungsschraube 2 aufnehmenden Stutzen 13 verrastbar ist und die Außenränder 20 unter Eigenspannung gegen die Innenwandung 14 und/oder den Rand des Gehäuses 6 anliegen.

Dabei ist in Fig. 5 und 6 angedeutet, daß außer mit der schüsselförmigen Verschlußscheibe dies auch mit einer ebenen Scheibe geschehen kann, wobei die ebene Scheibe an ihrem Außenrand 20 durch Berührungsspannung gegenüber dem Gehäuse 6 bzw. dessen gegebenenfalls sich nach innen verjüngender Innenwand 14 abdichtet.

Die schüsselförmige oder ebene Verschlußscheibe 11 kann wiederum Dichtlippen 17 zum Abdichten der Entlüftungsschraube 2 aufweisen, deren Rand konzentrisch zu der Rastöffnung 16 der Verschlußscheibe 11 verläuft.

In Fig. 4 und 5 ist ferner erkennbar, daß die schüsselförmige oder eingewölbte Verschlußscheibe 11 im Bereich der Entlüftungsöffnung 5 bis zu der äußeren Ebene ihres umlaufenden Randes 20 aus die Entlüftungsöffnung 5 umgebendem Vollmaterial besteht, während sie im übrigen die schon erwähnte Einwölbung zeigt. Somit entsteht eine röhrchenförmige Entlüftungsöffnung 5, ohne daß ein empfindliches Röhrchen gebildet wird.

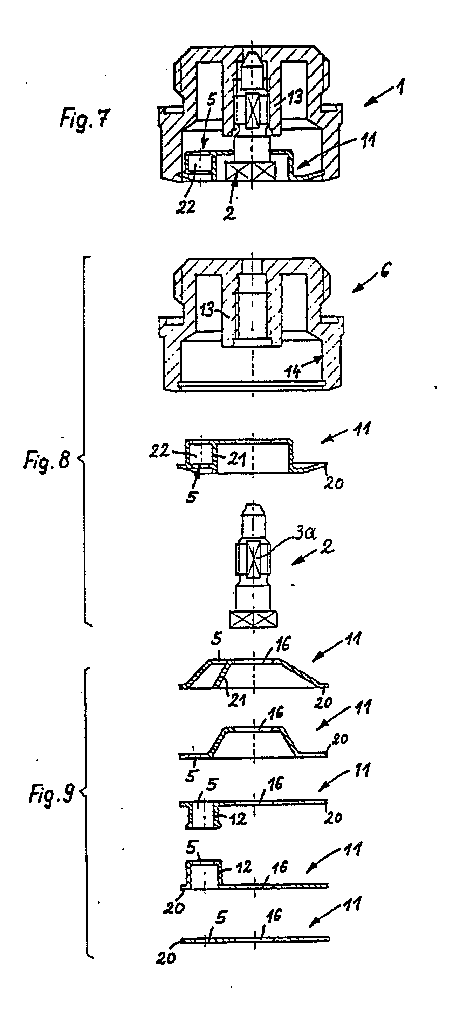

Beispielsweise in den Figuren 7 bis 11 sind Ausführungsformen gezeigt, bei denen der Außenrand 20 der Abschlußscheibe 11 od. dgl. Verschlußteil mit dem Ventilgehäuse 6 insbesondere an dessen Innenwandung 14 verrastet ist und die Innenöffnung 15 dichtend an der Entlüftungsschraube 2 unmittelbar anliegt. Dabei zeigen die Figuren 7 bis 9 topfförmig ausgebildete Verschlußscheiben 11, wobei im Bereich der Entlüftungsöffnung 5 Stege 21 zur Bildung einer rohrförmigen oder hülsenförmigen Entlüftungsöffnung 5 angeordnet sein können. Es können auch auch gemäß Fig. 9 nach außen oder innen eingeformte Röhrchen 12 oder einfach eine völlig ebene Scheibe mit einer Lochung 5 vorgesehen sein.

In Fig. 7 und 8 ist die Entlüftungsöffnung 5 an der topfförmigen Abschlußscheibe 11 beispielsweise durch eine Kammer 22 mit zwei koaxialen Öffnungen 5 gebildet, die gegenüber dem Querschnitt der Kammer 22 selbst einen geringeren Durchtrittsquerschnitt haben. Somit kann hier ein Entlüftungsschlauch mit Eigenelastizität oder gar mit einem äußeren Bund formschlüssig eingesteckt werden.

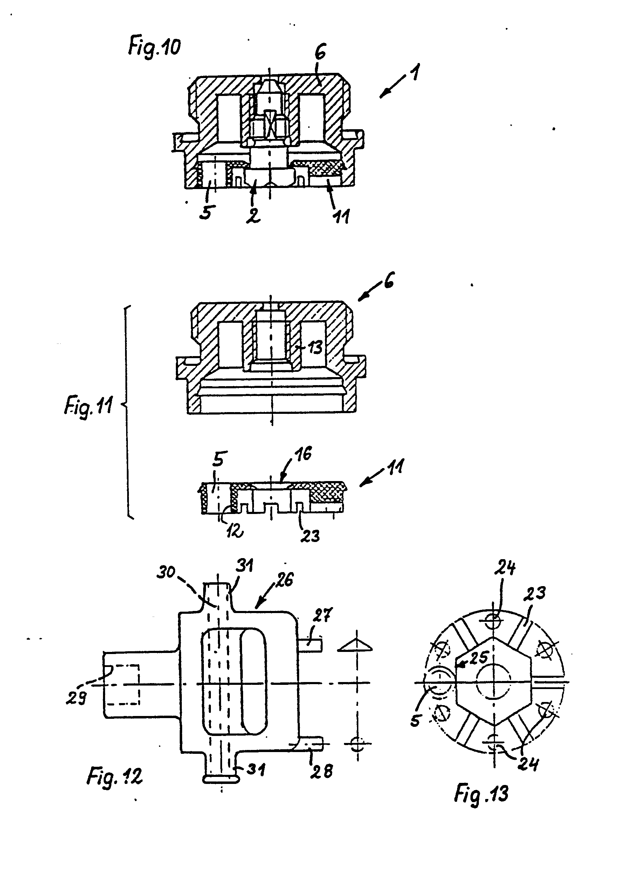

In den Figuren 10, 11 sowie 18 bis 23 ist die drehbare Verschlußscheibe 11 an der Innenwand 14 des Ventilgehäuses 6 und/oder dem inneren Aufnahmestutzen 13 für die Entlüftungsschraube 2 oder an der Entlüftungsschraube 2 selbst befestigbar, verrastbar oder in anderer Form dicht anbringbar und weist eine derartige Dicke auf, daß radiale Schlitze 23, Bohrungen 24, Rippen, eine Innenprofilierung 25 od. dgl. Kupplungsmöglichkeit für einen an der Scheibe 11 angreifenden, in Fig. 12 dargestellten Betätigungsschlüssel 26 vorgesehen sind. Man erkennt an diesem Betätigungsschlüssel an der in der Zeichnung rechten Seite vorstehende Vorsprünge 27 und 28, die gemäß der unmittelbar daneben befindlichen Darstellung unterschiedliche Querschnitte haben können. So können Vorsprünge 28 mit Bohrungen 24 oder aber dreieckförmige Vorsprünge 27 mit einem Innensechskant 25 zusammenwirken. Der Betätigungsschlüssel 26 hat gemäß Fig. 12 neben dieser Kupplungsstelle 27 oder 28 zum Drehen der Verschlußscheibe 11 eine Kupplung 29 zum Angreifen an der Entlüftungsschraube 2. Diese ist als Innenmehrkant zum Übergreifen des Kopfes der Entlüftungsschraube 2 ausgebildet und befindet sich in Fig. 12 auf der rechten Seite.

Eine Besonderheit des Betätigungsschlüssels 26 von eigener erfinderischer Bedeutung besteht nun darin, daß er zusätzlich zu seinen Kupplungsstellen einen Entlüftungskanal 30 aufweist, welcher mit der Entlüftungsöffnung 5 oder einem Röhrchen 12 des Verschlußteiles 11 kuppelbar, insbesondere in oder auf diese als Verlängerung steckbar ist. Man erkennt deutlich, daß der den Betätigungsschlüssel 26 integrierte Entlüftungskanal 30 beidseits des Schlüssels 26 übersteht und Kupplungsstutzen 31 bildet. Dabei könnte schon ein solcher Kupplungsstutzen 31 genügen, um eine Verbindung mit der Entlüftungsöffnung 5 herzustellen. Eine Verbesserung ist es aber, wenn zwei Kupplungsstutzen 31 vorgesehen sind, so daß auf den zweiten Stutzen dann noch zusätzlich ein Schlauch od. dgl. Verlängerung aufgesteckt werden kann. Ein solcher Betätigungsschlüssel 26 stellt eine besonders vorteilhafte Ausgestaltung der Erfindung dar, weil er nicht nur das Verdrehen der Entlüftungsschraube 2 und außerdem das Verdrehen der Entlüftungsöffnung 5, sondern zusätzlich auch das Verlängern der Entlüftungsöffnung 5 von dem zu entlüftenden Teil weg ermöglicht.

1 Fig. 14 und 15 zeigt ein Ausführungsbeispiel, bei welchem der Verschlußteil 11 innerhalb des Ventilgehäuses 6 durch einen Federring 32 gehalten ist, der in eine Nut 33 der Gehäusewand 14 und in eine Nut 34 des Verschlußteiles 11 gleichzeitig eingreift. Der Federring 32 od.dgl. Wellensicherung kann aber den Verschlußteil 11 oder daran befindliche Vorsprünge übergreifen.

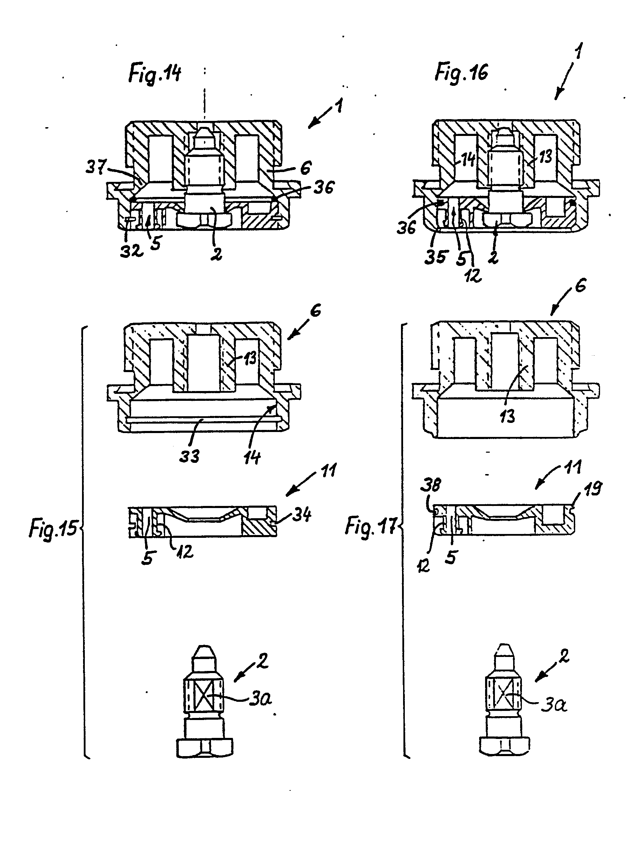

Fig. 16 und 17 zeigt ein Entlüftungsventil 1, bei welchem die verdrehbare Verschlußscheibe 11 od.dgl. Verschlußteil durch eine Einbörderlung 35 am äußeren Rand des Ventilgehäuses 6 gehalten ist, indem die Einbörderlung 35 die Verschlußscheibe 11 an deren Außenrand 19 übergreift. Fig. 14 bis 17 zeigt außerdem, daß als Abdichtung zwischen dem Ventilgehäuse 6 und der Verschlußscheibe 11 od. dgl. vor allem bei einer eine gewisse axiale Dicke aufweisenden Verschlußscheibe 11 ein Dichtungsring 36 zwischen der Stirnseite der Verschlußscheibe 11 und einem Gehäuseabsatz 37 (Fig. 14) und/oder in einer Nut 38 am Gehäuse 6 und/oder an der Verschlußscheibe 11 (Fig. 16) vorgesehen sein kann, was vor allem bei einer Metallausführung des Verschlußteiles 11 zweckmäßig ist.

Dabei zeigen beide Ausführungsformen - Fig. 14 und Fig. 16 - daß insbesondere bei einer Kunststoffausführung eine innere Dichtung durch Dichtungslippen am Rand der inneren Öffnung 16 des Verschlußteiles 11 gegenüber der Entlüftungsschraube 2 gebildet sind, wie es auch schon anhand anderer Ausführungsbeispiele erwähnt wurde. Selbstverständlich können dabei an dieser Stelle auch andere Abdichtungsformen gemäß den schon beschriebenen oder noch zu beschreibenden Ausführungsbeispielen gewählt werden.

Es wurde bereits erwähnt, daß die Entlüftungsöffnung 5 zusammen mit dem Verschlußteil 11 axial nach außen verschiebbar und festlegbar sein kann. Fig. 18 zeigt nun eine Lösung, bei welcher der Verschlußteil 11 axial verschieblich in das Ventilgehäuse 6 eingesteckt und in einer Umfangsnut 39 od. dgl., im Ausführungsbeispiel einem Gewindehinterstich der Entlüftungsschraube 2 mittels Dichtlippen verrastet und somit mit dem Herausdrehen der Entlüftungsschraube 2 axial gegenüber dem Ventilgehäuse verschiebbar ist, so daß insbesondere sein Luftaustritt, vorzugsweise ein röhrchenförmiger Luftaustritt aus dem Ventilgehäuse 6 ausfahrbar ist. Dabei ist der Verschlußteil 11, wie außerdem schon früher erwähnt, mittels stirnseitigen Kupplungsverformungen mit Hilfe des Schlüssels 26 unabhängig von dieser Axialbewegung auch verdrehbar.

Eine Abwandlung zeigt Fig. 20 und 21. Die Innenöffnung 16 des Verschlußteiles 11, die in Dichtverbindung mit der Entlüftungsschraube 2 steht, weist in diesem Falle ein Innengewinde 40 und die Entlüftungsschraube 2 in diesem Dichtbereich ein Außengewinde 41 auf und der Verschlußteil 11 ist drehbar und über das Gewinde 41 der Entlüftungsschraube 2 ohne deren Betätigung axial mit seiner Entlüftungsöffnung 5 aus dem Ventilgehäuse 6 vorzugsweise bis zu einem Anschlag 42 herausschraubbar, wobei im Ausführungsbeispiel eine röhrchenförmige Entlüftung 12 vorgesehen ist, die in eingeschraubtem Zustand gemäß Fig. 20 in das Ventilgehäuse 6 versenkt ist und in herausgeschraubtem Zustand aus diesem vorsteht. Diese Lösung hat den Vorzug, daß zunächst das Röhrchen 12 durch Verdrehen des Verschlußteiles 11 aus dem Ventilgehäuse 6 hervorgeholt und in die richtige Position gebracht werden kann, bevor durch Verdrehen der Entlüftungsschraube 2 der eigendliche Entlüftungsvorgang beginnt.

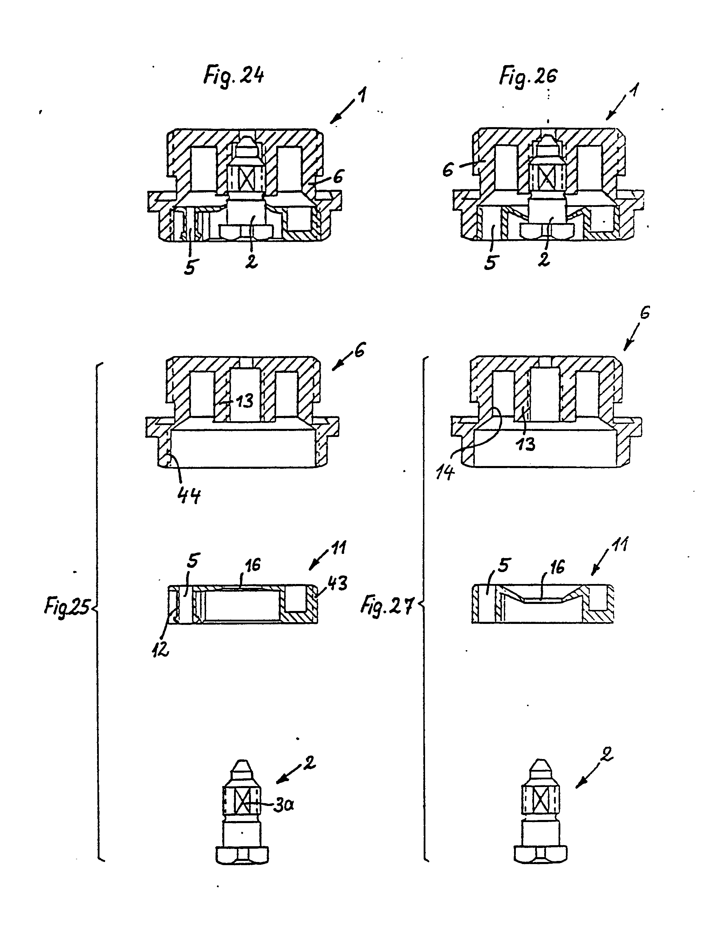

Eine ähnliche Lösung ist in Fig. 22 und 23 dargestellt. In diesem Falle ist an der Außenseite des Verschlußteiles 11 ein Außengewinde 43 und an einem Bereich der Innenwand 14 des Ventilgehäuses 6 ein dazu passendes Innengewinde 44 für die Axialverstellung des Verschlußteiles 11 mit seinem Entlüftungsröhrchen 12 vorgesehen. Dabei ist das Innengewinde 44 des Gehäuses 6 in dessen tiefer liegendem, die Entlüftungsschraube 2 aufnehmenden Stutzen 13 umgebenden Bereich vorgesehen. Demgegenüber zeigt Fig. 24 und 25 ein Ausführungsbeispiel, bei welchem das Innengewinde 44 des Gehäuses 6 im randnahen Außenbereich vorgesehen ist.

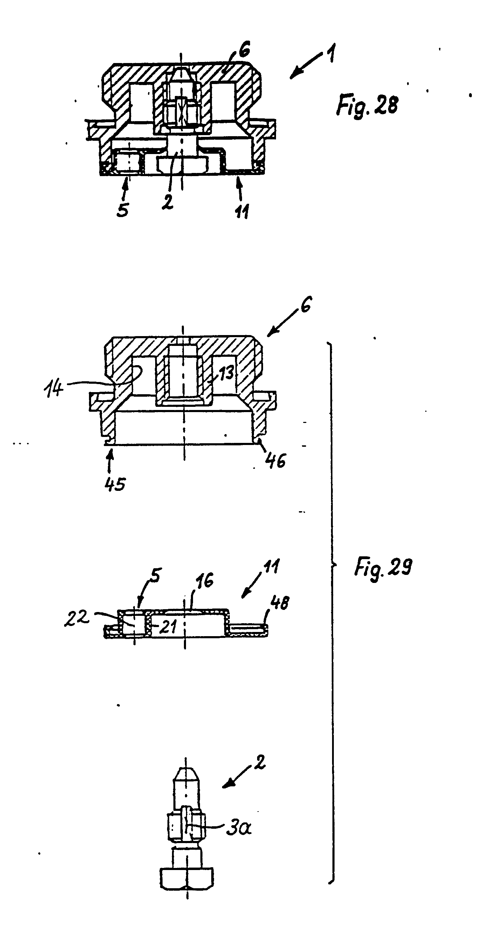

Fig. 26 und 27 zeigt schließlich noch eine Lösung, bei welcher der Verschlußteil 11 lediglich über die Dichtlippen und den Kopf der Entlüftungsschraube 2 gehalten und im übrigen frei axial verschiebbar und verdrehbar ist, so daß nach dem Öffnen der Entlüftungsschraube auch eine axiale Verstellung durch axiales Herausziehen möglich ist.

In den Figuren 28 bis 31 erkennt man, daß der Verschlußteil 11 den stirnseitigen Rand 45 des Ventilgehäuses 6 übergreifen kann, so daß er relativ leicht auch ohne Hilfsmittel drehbar ist.

Dabei sei an dieser Stelle angemerkt, daß die Drehbewegung relativ gut und leicht übertragen werden kann, da sie an einem relativ großen Hebelarm bzw. Außenradius der Verschlußscheibe aufgebracht werden kann. Entsprechend geringer braucht die Kraft auch nur zu sein.

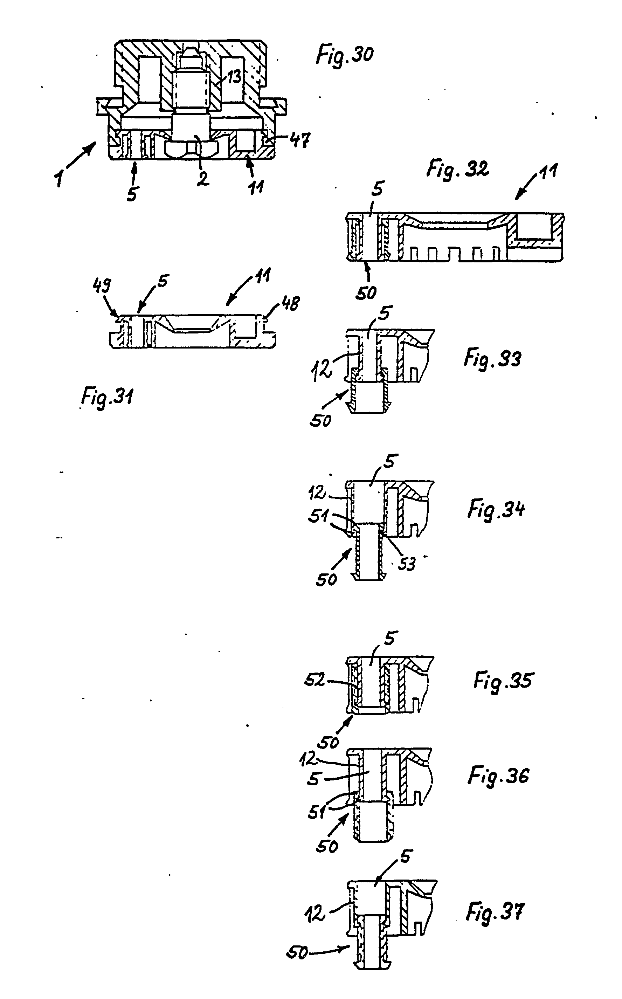

In Fig. 28 übergreift der Verschlußteil 11 einen am Rand 45 des Ventilgehäuses 6 vorgesehenen, nach außen vorstehenden Bund 46 von außen, während in Fig. 30 ein nach innen ragender Bund 47 von innen rastend übergriffen ist. Der Rastvorsprung 48 an dem Verschlußteil 11 kann dabei sowohl in diesen Ausführungsbeispielen als auch in anderen Fällen stegartig ausgebildet sein und eine sein Aufstecken erleichternde Schrägung 49 haben.

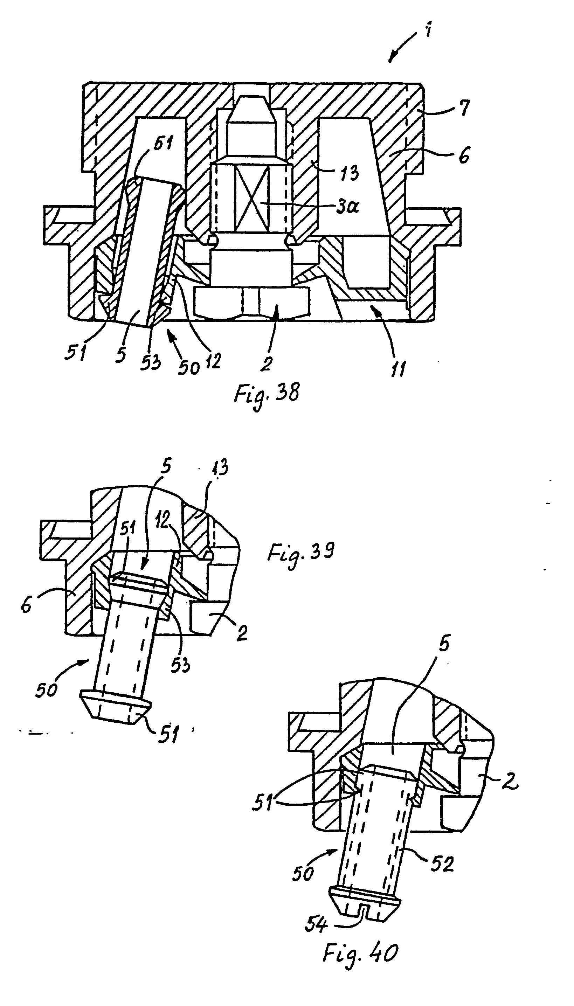

Zusätzlich zu der axialen Verstellbarkeit des Verschlußteiles 11 oder statt dieser axialen Verstellbarkeit des Verschlußteiles 11 kann auch das Entlüftungsröhrchen 12, wie bereits erwähnt, aus einer versenkten Position im Inneren des Ventilgehäuses 6 herausgeholt und in seine Entlüftungsposition gebracht werden. Es kann also ein relativ zu der Entlüftungsöffnung 5 axial verstellbares Entlüftungsröhrchen 50 zur Verlängerung der Entlüftungsöffnung vorgesehen sein. Dies ist vor allem in den Figuren 32 bis 37 sowie in abgewandelter Form in den Figuren 38 bis 40 dargestellt. Dabei erkennt man in den verschiedenen Ausführungsformen, daß das verstellbare Rohrstück 50 seinerseits relativ zu einer genügend langen Öffnung 5 oder zu einem festen Entlüftungsrohrstück 12 auf dessen Außenseite oder an dessen Innenseite geführt verschiebbar sein kann, wobei jeweils eine Endbegrenzung mittels sich hintergreifender Bunde 51 od. dgl. Anschlägen vorgesehen sind.

Dabei kann das nach außen verstellbare Röhrchenteil 50 mittels Gewinde 52 relativ zu wenigstens einem in das Gewinde eingreifenden Gegenstück oder Gegengewinde aus- und eindrehbar sein. Dies erkennt man in den Figuren 35 bis 37 und 40. Dabei ist ferner angedeutet, daß der herausdrehbare Teil des Röhrchens 50 ein Innengewinde (Fig. 36) oder ein Außengewinde (Fig. 37) haben kann und dementsprechend entweder außen auf dem feststehenden Rohrstutzen 12 oder in dessen Innerem oder in einer Entlüftungsöffnung 5 (Fig. 40) angeordnet ist.

Eine ganz bevorzugte und deshalb vergrößert dargestellte Ausführungsform zeigt Fig. 38 bis 40.

Dabei ist vorgesehen, daß ein verstellbares Entlüftungsröhrchen 50 an dem Verschlußteil 11 vorgesehen ist, welches schräg zu der Mittelachse des Ventiles 1 von innen nach außen von dieser weg verstellbar ist.

Dabei hat das Röhrchen 50 - ähnlich wie auch in Fig. 32 bis 37 - an beiden Enden einen Anschlagbund 51 und die das Röhrchen 50 haltende Öffnung 5, die praktisch aufgrund ihrer Länge auch als Rohrstutzen 12 angesehen werden oder als solcher ausgebildet sein kann und entsprechend der Verstellbarkeit des Röhrchens 50 gemäß Fig. 38 bis 40 ebenfalls schräg von innen nach außen verlaufen kann, hat an ihrem Außenrand eine die Außenseite des Röhrchens 50 beaufschlagende Einziehung 53, die sich zum Inneren des Gehäuses 6 hin auf mindestens den Außendurchmesser des inneren Anschlagbundes 51 erweitert. Dadurch ist es möglich, daß das Röhrchen 50 mit seinem hinteren Anschlagbund 51 in die Öffnung 5 hineingezogen wird, bis es gemäß Fig. 39 mit seinem hinteren Anschlagbund 51 von innen her an der Einziehung 53 anschlägt. Dadurch ergibt sich in dieser Entlüftungsposition in axialer Richtung Formschluß über eine verhältnismäßig große Länge an einem entsprechend großen Außenumfang dieses Röhrchens 50.

Fig. 40 zeigt dabei noch, daß das herausdrehbare Röhrchen 50 an seinem äußeren Ende eine Angriffsstelle für ein Werkzeug, im Ausführungsbeispiel einen Schlitz 54 aufweist, der das Herausdrehen erleichtert. Statt eines Schlitzes kann auch ein Mehrkant od. dgl. vorgesehen sein, und gegebenenfalls läßt sich der Betätigungsschlüssel 26 entsprechend ausgestalten, um auch ein solches Röhrchen 50 heraus- und hineindrehen zu können. Selbstverständlich ist eine solche Anordnung auch beispielsweise bei den Ausführungsbeispielen gemäß den Figuren 32 bis 37 möglich.

Es sei noch erwähnt, daß das ausfahrbare Röhrchen 50 in der ausgefahrenen Endstellung lösbar festlegbar sein kann, vorzugsweise durch Rastung, Bajonettverschluß, sich hintergreifende Vorsprünge, Schrägflächen, Gewindeabschnitte od. dgl. Dies gilt für solche Röhrchen, die im übrigen verschiebbar und nicht mittels Gewinden verstellbar sind. Dadurch ergibt sich der Vorteil, daß das herausgezogene und lösbar fixierte Röhrchen ein wesentlich besseres Aufstecken eines Entlüftungsschlauches erlaubt, ohne dem Aufsteckdruck nachzugeben.

Fig. 38 bis 40 macht deutlich, daß diese schräge Verstellbarkeit des im übrigen in einem drehbaren Verschluß 11 angeordneten Röhrchens 50 beengten Platzverhältnissen entgegenkommt. In eingefahrenem Zustand befindet sich das Röhrchen 50 auf einem kleineren Umfang, so daß das gesamte Entlüftungsventil 1 entsprechend geringe Außenabmessungen haben kann, während durch die schräge Verstellbarkeit die Mündung dieses Röhrchens 50 auf einen größeren und somit für das Entlüften günstigen Umfang gelangt.

Wie schon erwähnt, kann der Verschlußteil 11 aus Metall und/oder Kunststoff bestehen. Dies hängt davon ab, ob man eine Abdichtung mit Dichtringen (Metallausführung) oder eine Selbstabdichtung (Kunststoffausführung) bevorzugt. Dabei kann auch der eigentliche Verschlußteil aus dem einen und ein verschiebbares Röhrchen aus dem anderen Werkstoff bestehen, falls beispielsweise ein aus Kunststoff bestehendes Verschlußteil 11 einen stabilen Schlauchanschluß haben soll oder aber ein stabildes Abschlußteil einen etwas anpaßbaren nachgiebigen Rohrstutzen aufweisen soll.

**Patentansprüche**

1. Entlüftungsventil (1) mit einer eine innere Entlüftungsöffnung (3) verschließenden Entlüftungsschraube (2) und einer Kammer (4) mit einer insbesondere durch Verdrehen in ihrer Position veränderbaren äußeren Entlüftungsöffnung (5), welche Kammer an einem Ventil- oder Stopfengehäuse (6) od.dgl. dicht angeschlossen ist, insbesondere zum Entlüften von Heizsystemen, vorzugsweise von Heizkörpern, wobei die innere Entlüftungsöffnung (3) in die Kammer (4) mündet, dadurch gekennzeichnet, daß die Kammer (4) von einer Innenhöhlung des Gehäuses (6) gebildet ist, an der ein Verschlußteil (11) dichtend befestigt ist, daß der Verschlußteil (11) als Scheibe oder scheibenförmiger Einsatz ausgebildet und drehbar an dem Gehäuse (6) befestigt ist und die äußere Entlüftungsöffnung (5) aufweist.

2. Entlüftungsventil nach Anspruch 1, dadurch gekennzeichnet, daß der drehbare Verschlußteil (11) an der Entlüftungsschraube (2) und/oder an dem die Entlüftungsschraube (2) aufweisenden inneren Stutzen (13) und/oder der diese mit Abstand umgebenden Innenwand (14) Zes Gehäuses (6) dichtend anliegt und/oder verrastet ist.

3. Entlüftungsventil nach Anspruch 1 oder 2, dadurch gekennzeichnet, daß der Verschlußteil (11) ganz oder nahezu ganz im Gehäuse (6) versenkt ist.

4. Entlüftungsventil nach einem der Ansprüche 1 bis 3, dadurch gekennzeichnet, daß der Verschlußteil (11) aus elastischem Werkstoff besteht und in seinem Dichtungs- oder Rastbereich durch seine Eigenelastizität verrast- oder anpreßbar ist.

5. Entlüftungsventil nach einem der Ansprüche 1 bis 4, dadurch gekennzeichnet, daß der Verschlußteil (11) durch an ihm vorhandene Dichtkanten und/oder Dichtflächen gegenüber dem Gehäuse (6) und/oder der Entlüftungsschraube (2) abdichtbar ist.

6. Entlüftungsventil nach einem der Ansprüche 1 bis 5, dadurch gekennzeicnnet, daß die Entlüftungsöffnung (5) als mit dem Verschlußteil

(11) und dessen Austrittsöffnung (5) verbundenes, von dem Verschlußteil (11) nach außen vorestehendes Röhrchen (12) ausgebildet ist.

7. Entlüftungsventil nach Anspruch 6, dadurch gekennzeichnet, daß das Entlüftungsröhrchen (12) an den Verschlußteil (11) angeformt ist.

8. Entlüftungsventil nach einem der vorstehenden Ansprüche, dadurch gekennzeichnet, daß das Entlüftungsröhrchen (12b) gegenüber dem Gehäuse (6) aus diesem heraus und in dieses hinein verschiebbar ist.

9. Entlüftungsventil nach einem der Ansprüche 1 bis 8, dadurch gekennzeichnet, daß die Entlüftungsöffnung (5) oder das Entlüftungsröhrchen (12) zusammen mit dem Verschlußteil (11) axial nach außen verschiebbar und festlegbar ist.

10. Entlüftungsventil nach einem der Ansprüche 1 bis 8, dadurch gekennzeichnet, daß das Entlüftungsröhrchen (12) relativ zu dem Verschlußteil (11) und dem Gehäuse (6) nach außen verschiebbar und in dieses versenkbar ist.

11. Entlüftungsventil nach einem der vorstehenden Ansprüche, dadurch gekennzeichnet, daß der Verschlußteil (11) eine im Zentrum der Scheibe angeformte, mit einer koaxialen Öffnung (15) zu der Lageröffnung der Scheibe versehene Dichtlippe (17) für die Abdichtung gegenüber der Entlüftungschraube (2) aufweist.

12. Entlüftungsventil nach einem der Ansprüche 6 bis 11, dadurch gekennzeichnet, daß das Enlüftungsröhrchen (12) insbesondere für das Aufstecken eines Schlauches an seiner Mündung einen äußeren Bund (18) oder für das Einstecken eines Schlauches an seiner Mündung einen inneren Bund (19) aufweist.

13. Entlüftungsventil nach einem der Ansprüche 1 bis 12, dadurch gekennzeichnet, daß der Verschlußteil (11) als schüsselförmige Scheibe ausgebildet ist, deren Innenöffnung (16) drehbar und dicht an dem die Entlüftungsschraube (2) aufnehmenden Stutzen (13) verrastbar ist und dessen Außenränder (20) insbesondere unter Eigenspannung gegen die Innenwandung (14) und/oder den Rand des Gehäuses (6) anliegen.

14. Entlüftungsventil nach einem der Ansprüche 1 bis 13, dadurch gekennzeichnet, daß der schüsselförmige Verschlußteil (11) vorzugsweise in seiner Vertiefung Dichtlippen (17) zum Abdichten der Entlüftungsschraube (2) aufweist und daß der Rand der Dichtlippen (17) konzentrisch zu der Rastöffnung (16) der Verschlußscheibe (11) verläuft.

15. Entlüftungsventil nach einem der Ansprüche 1 bis 14, dadurch gekennzeichnet, daß der insbesondere schüsselförmige oder eingewölbte Verschlußteil (11) od. dgl. im Bereich der Entlüftungsöffnung (5) bis zu der äußeren Ebene des umlaufenden Randes (20) aus die Entlüftungsöffnung (5) umgebendem Vollmaterial besteht.

16. Entlüftungsventil nach einem der Ansprüche 1 bis 15, dadurch gekennzeichnet, daß der Außenrand (20) des eine Abschlußscheibe bildenden Verschlußteils (11) mit dem Ventilgehäuse (6) insbesondere an dessen Innenwandung (14) verrastet ist und die Innenöffnung (15) dichtend an der Entlüftungsschraube (2) anliegt.

17. Entlüftungsventil nach einem der Ansprüche 1 bis 12, dadurch gekennzeichnet, daß der Verschlußteil (11) topfförmig ausgebildet ist und im Bereich der Entlüftungsöffnung (5) vorzugsweise Stege (21) zur Bildung einer rohrförmigen oder hülsenförmigen Entlüftungsöffnung (5) angeordnet sind.

18. Entlüftungsventil nach Anspruch 17, dadurch gekennzeichnet, daß die Entlüftungsöffnung (5) an dem topfförmigen Verschlußteil (11) durch eine Kammer (22) mit zwei koaxialen Öffnungen (5) gebildet ist, die vorzugsweise gegenüber dem Querschnitt der Kammer (22) selbst einen geringeren Durchtrittsquerschnitt haben.

19. Entlüftungsventil nach einem der vorstehenden Ansprüche, dadurch gekennzeichnet, daß der drehbare Verschlußteil (11) an der Innenwand (14) des Ventilgehäuses (6) und/oder dem inneren Aufnahmestutzen (13) für die Entlüftungsschraube (2) oder an der Entlüftungsschraube (2) selbst verrastbar, befestigbar bzw. dicht anbringbar ist und eine derartige Dicke aufweist, daß radiale Schlitze (23), Bohrungen (24), Rippen, eine Profilierung (25) od. dgl. Kupplungsmöglichkeit für einen an dem Verschlußteil (11) angreifenden Betätigungsschlüssel (26) vorgesehen sind.

20. Entlüftungsventil mit einem Betätigungsschlüssel zum Drehen des Verschlußteils nach Anspruch 19, dadurch gekennzeichnet, daß der Betätigungsschlüssel (26) od. dgl. zusätzlich zu seiner Kupplungsstelle zum Angreifen an dem Verschlußteil (11) einen Entlüftungskanal (30) aufweist, welcher mit der Entlüftungsöffnung (5) oder einem Röhrchen (12) des Verschlußteiles (11) kuppelbar, insbesondere in oder auf diese als Verlängerung steckbar ist.

21. Entlüftungsventil nach Anspruch 19 oder 20, dadurch gekennzeichnet, daß der dem Betätigungsschlüssel (26) integrierte Kanal (30) übersteht und wenigstens einen Kupplungsstutzen (31) bildet.

22. Entlüftungsventil nach einem der Ansprüche 19 bis 21, dadurch gekennzeichnet, daß der Betätigungsschlüssel (26) neben der Kupplungsstelle zum Drehen des Verschlußteiles (11) eine Kupplung (29) zum Angreifen an der Entlüftungsschraube (2) hat.

23. Entlüftungsventil nach einem der Ansprüche 1 bis 22, dadurch gekennzeichnet, daß der Verschlußteil (11) innerhalb des Ventilgehäuses (6) durch einen Federring (32) od. dgl. gehalten ist, der vorzugsweise in eine Nut (33) der Gehäusewand (14) und/oder in eine Nut (34) des Verschlußteiles (11) eingreift.

24. Entlüftungsventil nach einem der Ansprüche 1 bis 23, dadurch gekennzeichnet, daß die drehbare Verschlußscheibe od. dgl. durch eine Einbördelung (35) am äußeren Rand des Ventilgehäuses (6) od. dgl., die die Verschlußscheibe (11) an deren Außenrand (19) übergreift, gehalten ist.

25. Entlüftungsventil nach einem der vorstehenden Ansprüche, dadurch gekennzeichnet, daß als Abdichtung insbesondere zwischen dem Ventilgehäuse (6) und dem Verschlußteil (11) ein Dichtungsring (36) zwischen der Stirnseite des Verschlußteiles (11) od. dgl. und einem Gehäuseabsatz (37) und/oder in einer Nut (38) am Gehäuse (6) und/oder an dem Verschlußteil (11) vorgesehen ist.

26. Entlüftungsventil nach einem der vorstehenden Ansprüche, dadurch gekennzeichnet, daß der Verschlußteil (11) axial verschieblich in das Ventilgehäuse (6) od. dgl. eingesteckt und in einer Umfangsnut (39) od. dgl., insbesondere einem Gewindehinterstich der Entlüftungsschraube (2) mittels Dichtlippen od. dgl. verrastet und mit dem Herausdrehen der Entlüftungsschraube (2) axial gegenüber dem Ventilgehäuse (6) verschiebbar ist, so daß insbesondere sein Luftaustritt, vorzugsweise ein röhrchenförmiger Luftaustritt aus dem Ventilgehäuse (6) ausfahrbar ist.

27. Entlüftungsventil nach einem der vorstehenden Ansprüche, dadurch gekennzeichnet, daß die Innenöffnung (16) des Verschlußteiles (11), die in Dichtverbindung mit der Entlüftungsschraube (2) steht, ein Innengewinde (40) und die Entlüftungsschraube (2) in diesem Bereich ein Außengewinde (41) aufweist und der Verschlußteil drehbar und über das Gewinde (41) der Entlüftungsschraube (2) ohne deren Betätigung axial mit seiner Entlüftungsöffnung (5) aus dem Ventilgehäuse (6) vorzugsweise bis zu einem Anschlag (42) herausschraubbar ist und vorzugsweise eine röhrchenförmige Entlüftung (12) aufweist, die in eingeschraubtem Zustand in das Ventilgehäuse (6) versenkt ist und in herausgeschraubtem Zustand aus diesem vorsteht.

28. Entlüftungsventil nach einem der Ansprüche 1 bis 26, dadurch gekennzeichnet, daß an der Außenseite des Verschlußteiles (11) ein Außengewinde (43) und an einem Bereich der Innenwand des Ventilgehäuses (6) ein dazu passendes Innengewinde (44) für die Axialverstellung des Verschlußteiles (11) vorgesehen sind.

29. Entlüftungsventil nach Anspruch 28, dadurch gekennzeichnet, daß das Innengewinde (44) des Gehäuses (6) in dessen tiefer liegendem, den die Entlüftungsschraube (2) aufnehmenden Stutzen (13) umgebenden Bereich und/oder im randnahen Außenbereich vorgesehen ist.

30. Entlüftungsventil nach einem der vorstehenden Ansprüche, dadurch gekennzeichnet, daß der Verschlußteil (11) den stirnseitigen Rand (45) des Ventilgehäuses (6) übergreift, so daß er vorzugsweise ohne Hilfsmittel drehbar ist.

31. Entlüftungsventil nach einem der Ansprüche 1 bis 30, dadurch gekennzeichnet, daß der Verschlußteil (11) einen am Rand (45) des Ventilgehäuses (6) vorgesehenen nach außen vorstehenden Bund (46) von außen oder nach innen ragenden Bund (47) von innen rastend übergreift.

32. Entlüftungsventil nach einem der Ansprüche 1 bis 31, dadurch gekennzeichnet, daß der Rastvorsprung (48) an dem Verschlußteil (11) stegartig ausgebildet ist und vorzugsweise eine sein Aufstecken erleichternde Schrägung (49) hat.

33. Entlüftungsventil nach einem der vorstehenden Ansprüche, dadurch gekennzeichnet, daß ein relativ zu der Entlüftungsöffnung (5) axial verstellbares Entlüftungsrörchen (50) zur Verlängerung der Entlüftungsöffnung (5) vorgesehen ist.

34. Entlüftungsventil nach einem der Ansprüche 1 bis 33, dadurch gekennzeichnet, daß das verstellbare Rohrstück (50) seinerseits relativ zu einem festen Entlüftungsrohrstutzen (12) auf dessen Außenseite oder an dessen Innenseite oder im Inneren einer Entlüftungsöffnung (5) geführt verschiebbar ist, wobei vorzugsweise eine Endbegrenzung mittels sich hintergreifender Bunde (51) od. dgl. Anschlägen vorgesehen ist.

35. Entlüftungsventil nach Anspruch 33 oder 34, dadurch gekennzeichnet, daß das nach außen verstellbare Rohrstück (50) mittels Gewinde (52) relativ zu wenigstens einem in das Gewinde eingreifenden Gegenstück oder Gegengewinde aus- und eindrehbar ist.

36. Entlüftungsventil nach Anspruch 35, dadurch gekennzeichnet, daß das herausdrehbare Rohrstück (50) an seinem äußeren Ende eine Angriffsstelle für ein Werkzeug, vorzugsweise einen Schlitz (54), Mehrkant od. dgl. aufweist.

37. Entlüftungsventil nach einem der Ansprüche 33 bis 36, dadurch gekennzeichnet, daß das herausdrehbare Rohrstück (50) ein Innen- oder ein Außengewinde hat und außen auf dem feststehenden Rohrstutzen (12) oder in dessen Innerem oder im Inneren einer anderen Entlüftungsöffnung (5) angeordnet ist.

38. Entlüftungsventil nach einem der vorstehenden Ansprüche, dadurch gekennzeichnet, daß ein verstellbares Entlüftungsröhrchen (50) an dem Verschlußteil (11) vorgesehen ist, welches schräg zu der Mittelachse des Ventiles (1) von innen nach außen von dieser weg verstellbar ist.

39. Entlüftungsventil nach einem der Ansprüche 33 bis 38, dadurch gekennzeichnet, daß das Röhrchen (50) an seinen beiden Enden einen Anschlagbund (51) od.dgl. aufweist und daß die das Röhrchen (50) haltende Öffnung (5) an ihrem Außenrand eine die Außenseite des Röhrchens (50) beaufschlagende Einziehung (53) hat, die sich zum Inneren des Gehäuses (6) hin auf mindestens den Außendurchmesser des inneren Anschlagbundes (51) erweitert.

40. Entlüftungsventil nach einem der vorstehenden Ansprüche, dadurch gekennzeichnet, daß das ausfahrbare Röhrchen (50) in der ausgefahrenen Endstellung lösbar festlegbar ist, vorzugsweise durch Rastung, Bajonettverschluß, sich hintergreifende Vorsprünge, Schrägflächen, Gewindeabschnitt od. dgl.

41. Entlüftungsventil nach einem der vorstehenden Ansprüche, dadurch gekennzeichnet, daß der Verschlußteil (11) aus Metall und/oder Kunststoff besteht.

**Claims**

1. A vent valve (1) having a vent screw (2) closing an inner vent hole (3) and a chamber (4) having an outer vent hole (5), in particular an outer vent hole variable in its position by twisting, said chamber being tightly connected to a valve or plug housing (6) or the like, in particular for venting heating systems, preferably radiators, the inner vent hole (3) opening out into the chamber (4), <u>characterized in that</u> the chamber (4) is formed by an interior cavity of the housing (6), a plug part (11) being sealingly secured to said cavity, that the plug part (11) takes the form of a disc or disc- shaped insert and is rotatably attached to the housing (6) and has the outer vent hole (5).

2. The vent valve as claimed in claim 1, characterized in that the rotatable plug part (11) sealingly rests against and/or is interlocked with the vent screw (2) and/or with the inner socket (13) having the vent screw (2) and/or with the inside wall (14) which belongs to the housing (6) and surrounds said screw at a distance.

3. The vent valve as claimed in claim 1 or claim 2, characterized in that the plug part (11) is completely or almost completely sunk in the housing (6).

4. The vent valve as claimed in any one of claims 1 to 3, characterized in that the plug part (11) is made of elastic material and in the sealing or engaging area thereof its inherent elasticity adapts it for interlocking or pressing contact.

5. The vent valve as claimed in any one of claims 1 to 4, characterized in that the plug part (11) is adapted to be sealed relative to the housing (6) and/or the vent screw (2) by sealing edges and/or sealing surfaces on said plug part.

6. The vent valve as claimed in any one of claims 1 to 5, characterized in that the vent hole (5) takes the form of a tube (12) which is connected to the plug part (11) and the outlet hole (5) thereof and projects outwardly from said plug part (11).

7. The vent valve as claimed in claim 6, characterized in that the vent tube (12) is formed onto the plug part (11).

8. The vent valve as claimed in any one of the preceding claims, characterized in that the vent tube (12) is movable relative to the housing (6), into and out of the same.

9. The vent valve as claimed in any one of claims 1 to 8, characterized in that the vent hole (5) or the vent tube (12) together, with the plug part (11) is adapted to be moved axially outwardly and fixed.

10. The vent valve as claimed in any one of claims 1 to 8, characterized in that the vent tube (12) is adapted to be moved outwardly relative to the plug part (11) and the housing (6) and to be sunk therein.

11. The vent valve as claimed in any one of the preceding claims, characterized in that for sealing relative to the vent screw (2), the plug part (11) has a sealing lip (17) formed onto the centre of the disc and provided with a coaxial opening (15) to the bearing bore of the disc.

12. The vent valve as claimed in any one of claims 6 to 11, characterized in that the vent tube (12) has an outer collar (18), in particular for slipping a hose onto its orifice, or an inner collar (19) for slipping a hose into its orifice.

13. The vent valve as claimed in any one of claims 1 to 12, characterized in that the plug part (11) takes the form of a dish-shaped disc, the inner opening (16) thereof being adapted to be rotated and to tightly interlock with the socket (13) receiving the vent screw (2), and the outer edges (20) of said plug part resting against the inside wall (14) and/or the edge of the housing (6), in particular with inherent tension.

14. The vent valve as claimed in any one of claims 1 to 13, characterized in that the dish-shaped plug part (11) has preferably in its depression sealing lips (17) for sealing the vent screw (2) and that the edge of the sealing lips (17) extends concentrically to the engaging opening (16) of the plug disc (11).

15. The vent valve as claimed in any one of claims 1 to 14, characterized in that the plug part (11) or the like, in particular one of dish-shape or arcuate, is made of solid material surrounding the vent hole (5) in the region of the latter up to the outer plane of the peripheral edge (20).

16. The vent valve as claimed in any one of claims 1 to 15, characterized in that the outer edge (20) of the plug part (11) forming a sealing disc interlocks with the valve housing (6), in particular at the inside wall (14) thereof, and the inner opening (15) sealingly rests against the vent screw (2).

17. The vent valve as claimed in any one of claims 1 to 12, characterized in that the plug part (11) is cup-shaped and in the region of the vent hole (5) there are preferably webs (21) disposed to form a tubular or sleeve-like vent hole (5).

18. The vent valve as claimed in claim 17, characterized in that the vent hole (5) on the cup-shaped plug part (11) is formed by a chamber (22) with two coaxial openings (5) which compared to the section of the chamber (22) preferably have a smaller section of passage.

19. The vent valve as claimed in any one of the preceding claims, characterized in that the rotatable plug part (11) is adapted to interlock with, be attached or tightly applied to the inside wall (14) of the valve housing (6) and/or the inner receiving socket (13) for the vent screw (2) or the vent screw (2) itself and is of such a thickness that radial slits (23), bores (24), ribs, a profile (25) or a similar coupling potentiality are provided for a key (26) engaging the plug part (11).

20. A vent valve with a key for rotating the plug part as claimed in claim 19, characterized in that in addition to having a coupling point for engaging the plug part (11), the key (26) or the like has a vent duct (30) which is adapted to be coupled to the vent hole (5) or a tube (12) of the plug part (11), in particular to be fitted into or onto the same as an extension.

21. The vent valve as claimed in claim 19 or claim 20, characterized in that the duct (30) integrated in the key (26) protrudes and forms at least one coupling socket (31).

22. The vent valve as claimed in any one of claims 19 to 21, characterized in that apart from the coupling point for turning the plug part (11), the key (26) has a coupling (29) for engaging the vent screw (2).

23. The vent valve as claimed in any one of claims 1 to 22, characterized in that the plug part (11) is held within the valve housing (6) by a spring lock washer (32) or the like which preferably engages into a groove (33) of the housing wall (14) and/or into a groove (34) of the plug part (11).

24. The vent valve as claimed in any one of claims 1 to 23, characterized in that the rotatable plug disc or the like is held by a flange (35) at the outer edge of the valve housing (6) or the like, said flange engaging over the plug disc (11) at the outer edge (19) thereof.

25. The vent valve as claimed in any one of the preceding claims, characterized in that between the front end of the plug part (11) or the like and a shoulder (37) of the housing and/or in a groove (38) on the housing (6) and/or on the plug part (11) provision is made for a seal ring (36) as a seal, in particular between the valve housing (6) and the plug part (11).

26. The vent valve as claimed in any one of the preceding claims, characterized in that the plug part (11) is inserted into the valve housing (6) or the like so as to be axially movable and interlocks with a peripheral groove (39) or the like, in particular a thread recess of the vent screw (2), by means of sealing lips or the like and, as the vent screw (2) is unscrewed, is axially movable relative to the valve housing (6), so that in particular the air outlet of said plug part, preferably a tubular air outlet, is withdrawable from the valve housing (6).

27. The vent valve as claimed in any one of the preceding claims, characterized in that the inner opening (16), which belongs to the plug part (11) and is tightly connected to the vent screw (2), has a female thread (40) and the vent screw (2) has in this area a male thread (41) and the plug part (11) is adapted to be rotated and, by way of the thread (41) of the vent screw (2) without actuation of the latter, to be unscrewed axially with its vent hole (5) out of the valve housing (6) preferably up to a stop (42), and preferably has a tubular vent (12) which in the screwed in condition is sunk in the valve housing (6) and in the unscrewed condition protrudes from the latter.

28. The vent valve as claimed in any one of claims 1 to 26, characterized in that a male thread (43) is provided on the outside of the plug part (11) and a matching female thread (44) is provided on an area of the inside wall of the valve housing (6) for the axial adjustment of the plug part (11).

29. The vent valve as claimed in claim 28, characterized in that the female thread (44) of the housing (6) is provided in a region of the latter which lies deeper and surrounds the socket (13) receiving the vent screw (2) and/or in the outer area near the edge.

30. The vent valve as claimed in any one of the preceding claims, characterized in that the plug part (11) engages over the front end edge (45) of the valve housing (6) so as to be rotatable preferably without auxiliary means.

31. The vent valve as claimed in any one of claims 1 to 30, characterized in that an outwardly protruding collar (46) provided at the edge (45) of the valve housing (6) or an inwardly projecting collar (47) is engaged by the plug part (11) in a locking manner from the outside or from the inside, respectively.

32. The vent valve as claimed in any one of claims 1 to 31, characterized in that the engaging projection (48) on the plug part (11) is web-like and preferably has a slant (49) facilitating its attachment.

33. The vent valve as claimed in any one of the preceding claims, characterized in that a vent tube (50) axially adjustable relative to the vent hole (5) is provided to extend the latter.

34. The vent valve as claimed in any one of claims 1 to 33, characterized in that the adjustable tube (50) is in turn guided to be movable relative to a stationary vent socket (12) on the outside or inside of the latter or in the interior of a vent hole (5), provision preferably being made for a limit by means of rearwardly engaging collars (51) or similar stops.

35. The vent valve as claimed in claim 33 or claim 34, characterized in that the outwardly adjustable tube (50) is adapted to be screwed in and out by means of a thread (52) relative to at least one counterpart or matching thread engaging said thread.

36. The vent valve as claimed in claim 35, characterized in that the unscrewable tube (50) has at its outer end a point for engagement by a tool, preferably a slit (54), multiple edges or the like.

37. The vent valve as claimed in any one of claims 33 to 36, characterized in that the unscrewable tube (50) has a female thread or a male thread and is disposed on the outside on the stationary socket (12) or in the interior of the latter or in the interior of another vent hole (5).

38. The vent valve as claimed in any one of the preceding claims, characterized in that an adjustable vent tube (50) is provided on the plug part (11) and is adjustable from the inside to the outside at an angle to and away from the centre axis of the valve (1).

39. The vent valve as claimed in any one of claims 33 to 38, characterized in that the tube (50) has at both its ends a stop collar (51) or the like and that the hole (5) holding the tube (50) has on its outer edge a constriction (53) acting on the tube (50) and widening towards the interior of the housing to at least the outer diameter of the inner stop collar (51).

40. The vent valve as claimed in any one of the preceding claims, characterized in that the withdrawable tube (50) is adapted to be releasably fixed in the withdrawn end position, preferably by a catch, bayonet lock, rearwardly engaging projections, slanting faces, a threaded portion or the like.

41. The vent valve as claimed in any one of the preceding claims, characterized in that the plug part (11) is made of metal and/or plastic.

**Revendications**

1. Soupape de désaération (1) munie d'une vis de désaération (2) fermant une ouverture intérieure de désaération (3) et d'une chambre (4) présentant une ouverture extérieure de désaération (5) dont la position peut être modifiée, en particulier par rotation, laquelle chambre est raccordée de façon étanche à un corps de soupape ou de bouchon (6), ou analogue, en particulier pour la désaération de systèmes de chauffage, de préférence de radiateurs, l'ouverture intérieure de désaération (3) débouchant dans la chambre (4), caractérisée en ce que la chambre (4) est formée par une cavité intérieure du corps (6) à laquelle est fixé de façon étanche un obturateur (11), en ce que l'obturateur (11) est conçu sous forme de disque ou d'élément inséré en forme de disque et est fixé au corps (6) de manière à pouvoir tourner et présente l'ouverture extérieure de désaération (5).

2. Soupape de désaération selon la revendication 1, caractérisée en ce que l'obturateur pouvant tourner (11) s'applique de façon étanche à la vis de désaération (2) et/ou à la tubulure intérieure (13) présentant la vis de désaération (2) et/ou à la paroi intérieure (14) du corps (6), entourant cette tubulure avec espacement, et/ou est arrêté.

3. Soupape de désaération selon l'une des revendications 1 et 2, caractérisée en ce que l'obturateur (11) est encastré complètement ou à peu près complètement dans le corps (6).

4. Soupape de désaération selon l'une des revendications 1 à 3, caractérisée en ce que l'obturateur (11) est formé de matériau élastique et peut être arrêté ou appuyé, dans sa région d'étanchéité ou d'arrêt, par son élasticité propre.

5. Soupape de désaération selon l'une des revendications 1 à 4, caractérisée en ce que l'obturateur (11), par des bords d'étanchéité et/ou des surfaces d'étanchéité qu'il présente, peut être rendu étanche vis-à-vis du corps (6) et/ou de la vis de désaération (2).

6. Soupape de désaération selon l'une des revendications 1 à 5, caractérisée en ce que l'ouverture de désaération (5) est conçue sous forme de petit tube (12) faisant saillie vers l'extérieur en partant de l'obturateur (11), relié à l'obturateur (11) et à son ouverture de sortie (5).

7. Soupape de désaération selon la revendication 6, caractérisée en ce que le petit tube de désaération (12) est formé sur l'obturateur.

8. Soupape de désaération selon l'une des revendications précédentes, caractérisée en ce que le petit tube de désaération (12) peut coulisser relativement au corps (6) en sortant de celui-ci et en pénétrant dans celui-ci.

9. Soupape de désaération selon l'une des revendications 1 à 8, caractérisée en ce que l'ouverture de désaération (5) ou le petit tube de désaération (12) peut, en même temps que l'obturateur (11), coulisser axialement vers l'extériéur et être bloqué.

10. Soupape de désaération selon l'une des revendications 1 à 8, caractérisée en ce que le petit tube de désaération (12) peut coulisser vers l'extérieur relativement à l'obturateur (11) et au corps (6) et être encastré dans celui-ci.

11. Soupape de désaération selon l'une des revendications précédentes, caractérisée en ce que l'obturateur (11) présente une lèvre d'étanchéité (17) formée au centre du disque munie d'une ouverture (15) coaxiale à l'ouverture de palier du disque pour l'étanchéité vis-à-vis de la vis de désaération (2).

12. Soupape de désaération selon l'une des revendications 6 à 11, caractérisée en ce que le petit tube de désaération (12) présente à son embouchure un collet extérieur (18), en particulier pour la fixation d'un tuyau souple ou présente à son embouchure un collet intérieur (19) pour l'insertion d'un tuyau souple.

13. Soupape de désaération selon l'une des revendications 1 à 12, caractérisée en ce que l'obturateur (11) est conçu sous forme de disque en forme de cuvette dont l'ouverture intérieure (16) peut s'arrêter de manière à pouvoir tourner et de façon étanche sur la tubulure (13) logeant la vis de désaération (2) et dont les bords extérieurs (20) s'appliquent, en particulier sous leur tension propre, contre la paroi intérieure (14) et/ou le bord du corps (6).

14. Soupape de désaération selon l'une des revendications 1 à 13, caractérisée en ce que l'obturateur en forme de cuvette (11) présente, de préférence, dans son creux des lèvres d'étanchéité (17) pour l'étanchéité de la vis de désaération (2), et en ce que le bord des lèvres d'étanchéité (17) est dirigé concentriquement à l'ouverture d'arrêt (16) du disque d'obturateur (11).

15. Soupape de désaération selon l'une des revendications 1 à 14, caractérisée en ce que l'obturateur (11), ou analogue, en particulier en forme de cuvette ou voûté, est formé, dans la région de l'ouverture de désaération (5), jusqu'au plan extérieur du bord circonférentiel (20), de matière pleine entourant l'ouverture de désaération (5).

16. Soupape de désaération selon l'une des revendications 1 à 15, caractérisée en ce que le bord extérieur (20) de l'obturateur (11) formant un disque de fermeture est arrêté avec le corps de soupape (6), en particulier à la paroi intérieure (14) de celui-ci, et en ce que l'ouverture intérieure (15) s'applique de façon étanche contre la vis de désaération (5).

17. Soupape de désaération selon l'une des revendications 1 à 12, caractérisée en ce que l'obturateur (11) est conçu en forme de pot, et en ce que dans la région de l'ouverture de désaération (5) sont, de préférence, disposés des filets (21) pour la formation d'une ouverture de désaération (5) en forme de tube ou en forme de douille.

18. Soupape de désaération selon l'une des revendications 17 à 19, caractérisée en ce que l'ouverture de désaération (5) est formée sur l'obturateur en forme de pot (11) par une chambre (22) munie de deux ouvertures coaxiales (5) qui présentent, de préférence, une plus petite section de passage, relativement à la section de la chambre (22) elle-même.

19. Soupape de désaération selon l'une des revendications précédentes, caractérisée en ce que l'obturateur pouvant tourner (11) peut s'arrêter, se fixer ou être disposé de façon étanche sur la paroi antérieure (14) du corps de soupape (6) et/ou sur la tubulure intérieure (13) de logement de la vis de désaération (2) ou sur la vis de désaération (2) elle-même et présente une épaisseur telle que des fentes radiales (23), des perforations (24), des nervures, un profil (25) ou une possibilité d'accouplement analogue sont prévus pour une clef d'actionnement (26) s'appliquant à l'obturateur (11).

20. Soupape de désaération avec clef d'actionnement pour la rotation de l'obturateur selon la revendication 19, caractérisée en ce que la clef d'actionnement (26), ou analogue, présente, en plus de son endroit d'accouplement pour l'application à l'obturateur (11), un canal de désaération (30) qui peut être accouplé à l'ouverture de désaération (5) ou à un petit tube (12) de l'obturateur (11), en particulier se glisser dans ou sur ceux-ci en tant que prolongement.

21. Soupape de désaération selon l'une des revendications 19 et 20, caractérisée en ce que le canal (30) intégré à la clef d'actionnement (26) est en saillie et forme au moins une tubulure d'accouplement (31).

22. Soupape de désaération selon l'une des revendications 19 à 21, caractérisée en ce que la clef d'actionnement (26) présente, à côté de son endroit d'accouplement pour la rotation de l'obturateur (11) un accouplement (29) pour s'appliquer à la vis de désaération (2).

23. Soupape de désaération selon l'une des revendications 1 à 11, caractérisée en ce que l'obturateur (11) est retenu à l'intérieur du corps de soupape (6) par une bague de ressort, (32), ou analogue, qui, de préférence, s'engage dans une gorge (33) de la paroi (14) du corps et/ou dans une gorge (34) de l'obturateur (11).

24. Soupape de désaération selon l'une des revendications 1 à 23, caractérisée en ce que le disque d'obturateur pouvant tourner, ou analogue, est retenu au bord extérieur du corps de soupape (6), ou analogue, par une sertissure (35) qui s'engage par dessus le disque d'obturateur (11) au bord extérieur de celui-ci.

25. Soupape de désaération selon l'une des revendications précédentes, caractérisée en ce que comme étanchéité, en particulier entre le corps de soupape (6) et l'obturateur (11), un anneau d'étanchéité (36) est prévu entre le côté frontal de l'obturateur (11), ou analogue, et un gradin (37) du corps et/ou dans une gorge (38) du corps (6) et/ou de l'obturateur (11).

26. Soupape de désaération selon l'une des revendications précédentes, caractérisée en ce que l'obturateur (11) est encastré de manière à pouvoir coulisser axialement dans le corps de soupape (6), ou analogue, et est arrêté au moyen de lèvres d'étanchéité, ou analogues, dans une gorge circonférentielle (39), ou analogue, en particulier une dépouille de filetage de la vis de désaération (2) et peut coulisser axialement relativement au corps de soupape (6) lorsqu'on dévisse la vis de désaération, de sorte qu'en particulier sa sortie d'air, de préférence une sortie d'air en forme de petit tube, peut être déployée hors du corps de soupape (6).

27. Soupape de désaération selon l'une des revendications précédentes, caractérisée en ce que l'ouverture intérieure (16) de l'obturateur (11), qui est en liaison étanche avec la vis de désaération (2) présente un filetage intérieur (40) et la vis de désaération (2), dans cette région un filetage extérieur (41), et en ce que l'obturateur (11) peut tourner et peut être dévissé axialement avec son ouverture de désaération (5) hors du corps de soupape (6), par l'intermédiaire du filetage (41) de la vis de désaération (2), sans actionnement de celle-ci, de préférence jusqu'à une butée (42) et présente, de préférence, une desaération en forme de petit tube (12) qui, dans l'état vissé, est encastrée dans le corps de soupape (6) et dans l'état dévissé, fait saillie hors de celui-ci.

28. Soupape de désaération selon l'une des revendications 1 à 16, caractérisée en ce qu'au côté extérieur de l'obturateur (11) est prévu un filetage extérieur (43) et sur une région de la paroi intérieure du corps de soupape (6), un filetage intérieur (44) s'adaptant à celui-ci, pour le réglage axial de l'obturateur (11).

29. Soupape de désaération selon l'une des revendications 1 à 28, caractérisée en ce que le filetage intérieur (44) du corps (6) est prévu dans la région placée plus bas que celui-ci, entourant la tubulure (13) qui loge la vis de désaération (13) et/ou dans la région extérieure proche du bord.

30. Soupape de désaération selon l'une des revendications précédentes, caractérisée en ce que l'obturateur (11) s'applique par dessus le bord frontal (45) du corps de soupape (6) de sorte qu'il peut tourner, de préférence sans moyens auxiliaires.

31. Soupape de désaération selon l'une des revendications 1 à 30, caractérisée en ce que l'obturateur (11) s'applique de l'intérieur avec arrêt par dessus un collet (46) prévu au bord (45) du corps de soupape (6), faisant saillie vers l'extérieur ou un collet (47) faisant saillie vers l'intérieur.

32. Soupape de désaération selon l'une des revendications 1 à 31, caractérisée en ce que la saillie d'arrêt (48) de l'obturateur est conçue à la façon d'une nervure et présente, de préférence, un biseau (49) facilitant sa mise en place.

33. Soupape de désaération selon l'une des revendications précédentes, caractérisée en ce qu'il est prevu un petit tube de désaération (50) réglable axialement relativement à l'ouverture de désaération (5), pour le prolongement de l'ouverture de désaération (5).

34. Soupape de désaération selon l'une des revendications 1 à 33, caractérisée en ce que le tronçon de tube réglable (50) peut, de son côté, coulisser en étant guidé relativement à une tubulure de désaération fixe (12), sur le côté extérieur de celle-ci ou sur son côté intérieur ou à l'intérieur d'une ouverture de désaération (5), une limitation finale étant, de préférence, prévue au moyen de collets (51), ou butées analogues, s'accrochant ensemble.

35. Soupape de désaération selon l'une des revendication 33 ou 34, caractérisée en ce que le tronçon de tube (50) réglable vers l'extérieur peut être dévissé et vissé, au moyen de filetages (52), relativement à au moins une pièce complémentaire ou un filetage complémentaire, s'engageant dans le filetage.

36. Soupape de désaération selon la revendication 35, caractérisée en ce que le tronçon de tube pouvant être dévissé (50) présente à son extrémité extérieure un endroit d'application pour un outil, de préférence une fente (54), un polygone, ou analogue.

37. Soupape de désaération selon l'une des revendications 33 à 36' caractérisée en ce que le tronçon de tube pouvant être dévissé (50) présente un filetage intérieur ou extérieur et est disposé extérieurement sur la tubulure fixe (12) ou à l'intérieur de celui-ci ou à l'intérieur d'une autre ouverture de désaération (5).

38. Soupape de désaération selon l'une des revendications précédentes, caractérisée en ce que sur l'obturateur (11) est prévu un petit tube de désaération réglable (50) qui est réglable de l'intérieur vers l'extérieur, obliquement par rapport à l'axe médian de la soupape, en s'éloignant de cet axe.

39. Soupape de désaération selon l'une des revendications 33 à 38, caractérisée en ce que le petit tube (50) présente à ses deux extrémités un collet de butée (51), ou analogue' et en ce que l'ouverture (5) retenant le petit tube présente à son bord extérieur un resserrement (53) agissant sur le côté extérieur du petit tube (50) et qui s'élargit, vers l'intérieur du corps (6), au moins du diamètre extérieur du collet intérieur de butée (51).

40. Soupape de désaération selon l'une des revendications précédentes, caractérisée en ce que le petit tube pouvant se déployer (50) peut être fixé de façon détachable dans la position extrême déployée, de préférence par arrêt, verrouillage à baïonnette, saillie s'accrochant, surfaces obliques, tronçon de filetage, ou analogue.

41. Soupape de désaération selon l'une des revendications précédentes, caractérisée en ce que l'obturateur (11) est formé de métal et/ou de matière synthétique.

Fig.1

Fig.2

Fig.3

Fig.4

Fig.5

Fig.6

Fig. 7

Fig. 8

Fig. 9

Fig.10

6

1

5    2    11

6

Fig.11

13

5    16

11

12    23

30    31    26

27

29

31    28

Fig.12

24

23

25

5

24

Fig.13

Fig.14

Fig.16

Fig.15

Fig.17

Fig.18

1

5   2   39  25  11

6

Fig.19

6

13

11

16

12

5   25

2

3a

0 153 999

Fig. 20

Fig. 22

Fig. 21

Fig. 23

13

Fig. 24

1

6

5

2

Fig. 26

1

6

6

5

2

6

13

44

Fig.25

6

13

14

5

16

11

43

12

Fig.27

5

16

11

2

3α

2

Fig. 28

Fig. 29

Fig.30

Fig. 32

Fig.31

Fig.33

Fig.34

Fig.35

Fig.36

Fig.37

Fig. 38

Fig. 39

Fig. 40